(19) **Europäisches Patentamt European Patent Office Office européen des brevets**

(11) **EP 2 795 649 B1**

(12) **FASCICULE DE BREVET EUROPEEN**

(45) Date de publication et mention de la délivrance du brevet:
**03.02.2016 Bulletin 2016/05**

(21) Numéro de dépôt: **12810271.2**

(22) Date de dépôt: **20.12.2012**

(51) Int Cl.:
*H01H 33/666* (2006.01)

(86) Numéro de dépôt international:
**PCT/EP2012/076412**

(87) Numéro de publication internationale:
**WO 2013/092878 (27.06.2013 Gazette 2013/26)**

(54) **ACTIONNEUR ÉLECTROMAGNÉTIQUE À AIMANTS PERMANENTS ET INTERRUPTEUR-SECTIONNEUR MÉCANIQUE ACTIONNÉ PAR UN TEL ACTIONNEUR**

ELEKTROMAGNETISCHER AKTUATOR MIT PERMANENTMAGNETEN UND MIT EINEM SOLCHEN AKTUATOR BETÄTIGTER MECHANISCHER LASTTRENNSCHALTER

ELECTROMAGNETIC ACTUATOR COMPRISING PERMANENT MAGNETS AND MECHANICAL LOAD INTERRUPTER ACTUATED BY SUCH AN ACTUATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1162415**

(43) Date de publication de la demande:
**29.10.2014 Bulletin 2014/44**

(73) Titulaire: **ALSTOM Technology Ltd 5400 Baden (CH)**

(72) Inventeurs:
• **DUPRAZ, Jean-Pierre**
  **F-01360 Bressolles (FR)**
• **GRIESHABER, Wolfgang**
  **F-69006 Lyon (FR)**
• **COLLET, Michel**
  **F-69003 Lyon (FR)**

(74) Mandataire: **Brevalex**
  **95, rue d'Amsterdam**
  **75378 Paris Cedex 8 (FR)**

(56) Documents cités:
  **EP-A2- 0 996 135        WO-A1-96/41411**
  **DE-A1- 19 901 120**

## Description

## DOMAINE TECHNIQUE

L'invention concerne un actionneur électromagnétique à aimants permanents.

L'invention a trait plus particulièrement à une solution pour obtenir un actionneur à aimants permanents avec un couple très élevé en vue d'effectuer un faible déplacement en un temps très court.

L'application principale visée est l'actionnement d'un interrupteur-sectionneur mécanique, spécifiquement pour effectuer les manoeuvres mécaniques de sectionnement dans un disjoncteur mécatronique tel que décrit et revendiqué dans la demande de brevet déposée le même jour que la présente demande et intitulée « *Dispositif disjoncteur mécatronique et procédé de déclenchement associé et application à la coupure de courant continu élevé* ».

On précise ici qu'on entend par dispositif mécatronique, un disjoncteur qui associe une technique de coupure par au moins un composant semi-conducteur et un interrupteur-sectionneur électromécanique.

Bien que décrite en relation avec l'application principale visée, l'invention s'applique plus généralement à d'autres applications telles que celles actuelles dans lesquelles on cherche à utiliser un moteur à courant impulsionnel commandé où un couple très élevé est requis pour effectuer un faible déplacement en un temps très court.

L'invention concerne également un interrupteur-sectionneur actionné par un actionneur électromagnétique à aimants permanents.

## ART ANTÉRIEUR

Les actionneurs électromagnétiques à aimants permanents sont largement connus pour actionner différents organes mécaniques. Le document DE 199 01 120 A1 décrit un tel actionneur.

En particulier, on connaît déjà leur utilisation pour effectuer les commandes d'ouverture et de fermeture d'un disjoncteur, notamment d'une ampoule à vide pour couper les courants en moyenne tension. On peut citer ici par exemple la demande de brevet US2006208591 qui décrit une telle utilisation.

Comme précisé dans la demande de brevet au nom de la demanderesse précitée déposée ce jour, les inventeurs ont cherché à réaliser un actionneur apte à actionner très rapidement, c'est-à-dire en un temps inférieur à la milliseconde, un interrupteur-sectionneur électromécanique. Plus précisément, ils ont cherché à réaliser un actionneur, qui compte tenu des inerties, dues aux masses des parties mobiles, et des efforts statiques antagonistes, dus par exemple aux systèmes de verrouillages en position extrême d'ouverture ou de fermeture d'un interrupteur-mécanique, puisse répondre au cahier des charges suivant:

- développer un couple moteur considérable, typiquement de l'ordre de 2000 Nm, en réponse à l'apparition d'un courant de commande ;
- avoir un temps d'établissement de ce couple moteur extrêmement faible, de l'ordre de quelques microsecondes ;
- avoir une inertie la plus faible possible ;
- assurer un déplacement relativement réduit, de l'ordre de quelques millimètres, des parties mobiles d'interrupteur-sectionneur mécanique ;
- résister mécaniquement aux efforts et aux chocs correspondant à un usage intensif d'un dispositif disjoncteur-hydride tel que décrit et revendiqué dans la demande de brevet au nom de la demanderesse précitée déposée ce jour, typiquement correspondant à un nombre de l'ordre de 10 000 manoeuvres d'ouverture et de fermeture sur la durée de vie.

Ils ont alors pensé à un actionneur électromagnétique à aimants permanents et ont fait l'analyse de ce type d'actionneurs. Le principe physique fondamental pour réaliser un actionneur électromagnétique de ce type est d'utiliser les forces motrices de Laplace: un élément en matériau conducteur électrique immergé dans un champ d'induction magnétique est soumis, lorsqu'il est parcouru par une courant électrique, à une force motrice orientée dans une direction perpendiculaire au plan formé par le courant et le champ d'induction magnétique, cette force étant maximum lorsque les direction respectives du champ d'induction magnétique et du courant sont orthogonales. Le conducteur, dans ces circonstances, est désigné généralement sous le nom d'induit. Le couple moteur développé est alors proportionnel au courant circulant dans l'induit et au champ d'induction magnétique dans lequel celui-ci est immergé. Lorsque le champ d'induction magnétique est généré par des aimants permanents, sa valeur est liée à la nature des matériaux dans lesquels les aimants permanents sont réalisés. Typiquement, les aimants au Néodyme Fer Bore sont, parmi ceux connus, ceux qui génèrent la plus grande valeur de champ d'induction magnétique, jusqu'à 1,3 Tesla. Il y a donc une limite naturelle à la valeur du champ d'induction magnétique générée par les aimants permanents. Autrement dit, si l'on cherche à augmenter le couple moteur significativement la seule possibilité consiste à faire circuler des courants très élevés dans l'induit. Or, usuellement, sans tenir compte des contraintes thermiques, la valeur des courants acceptables par un moteur est limitée par le risque de démagnétisation des aimants permanents générant le champ d'induction magnétique nécessaire aux forces électromagnétiques de Laplace. Il apparaît donc impossible de dépasser avec les géométries d'actionneurs données et connues à ce jour, une limite de couple moteur liée à cet antagonisme.

Le but de l'invention est donc de proposer un actionneur électromagnétique à aimants permanents à couple moteur plus élevé que ceux connus selon l'état de l'art.

Un but particulier est de proposer un actionneur électromagnétique à aimants permanents qui puisse actionner très rapidement, c'est-à-dire en un temps inférieur à la milliseconde, un interrupteur-sectionneur mécanique et répondre au cahier des charges mentionné ci-dessus.

## EXPOSÉ DE L'INVENTION

Pour ce faire, l'invention a pour objet un actionneur électromagnétique du type à aimants permanents comprenant :

- une première partie de stator formée dans un premier substrat dont au moins une partie présente une symétrie de révolution avec au moins une face plane formant un disque définissant un axe de symétrie orthogonal au disque, et comprenant une première série d'aimants permanents, apparents sur au moins le disque du premier substrat en étant uniformément distribués à sa surface selon un pas angulaire constant ; chacun des aimants permanents présentant une forme avec au moins un plan de symétrie orthogonal à ses pôles Nord et Sud plans et parallèles entre eux, et parallèles au disque ; les surfaces de contact des aimants permanents avec le disque étant inscrites entre deux cercles concentriques entre eux et concentriques au disque ; le plan de symétrie de chaque aimant étant orienté selon un rayon de ces cercles concentriques; deux aimants permanents de la première série adjacents l'un de l'autre ayant un sens d'orientation magnétique inversé ;
- une deuxième partie de stator formée dans un deuxième substrat dont au moins une partie présente une symétrie de révolution avec au moins une face plane formant un disque définissant un axe de symétrie orthogonal au disque, et comprenant une deuxième série d'aimants permanents apparents sur au moins le disque du deuxième substrat en étant uniformément distribués à sa surface selon un pas angulaire constant ; chacun des aimants permanents présentant une forme avec au moins un plan de symétrie orthogonal à ses pôles Nord et Sud plans et parallèles entre eux, et parallèles au disque ; les surfaces de contact des aimants permanents avec le disque étant inscrites entre deux cercles concentriques entre eux et concentriques au disque; le plan de symétrie de chaque aimant étant orienté selon un rayon de ces cercles concentriques; deux aimants permanents de la deuxième série adjacents l'un de l'autre ayant un sens d'orientation magnétique inversé ; la deuxième partie de stator étant agencée parallèlement à la première partie de stator de façon à ce que les axes de symétrie de leurs disques soient confondus et de façon telle qu'un pôle d'un aimant de la deuxième série soit en regard d'un pôle inversé d'un aimant de la première série de sorte à créer des champs d'induction magnétiques intenses dans les entrefers ainsi constitués entre première et deuxième parties de stator ;
- au moins une paire de parties de rotor superposées l'une sur l'autre dans les entrefers entre la première et deuxième parties de stator, chaque partie de rotor étant formée à partir d'un substrat en matériau isolant électrique et comprenant au moins une piste d'au moins une couche en matériau conducteur électrique, disposée selon un plan parallèle au plan du substrat, la piste comprenant des portions de piste radiales, dites portions de piste motrices, de largeur unitaire inférieure ou égale à celle des aimants permanents selon la direction radiale et perpendiculaire à la direction de l'épaisseur des entrefers entre première et deuxième parties de stator, les portions de piste motrices étant espacées régulièrement les unes des autres selon le même pas angulaire que pour la première et deuxième série d'aimants permanents, le nombre de portions de piste motrices étant égal au nombre d'aimants des première et deuxième parties de stator.

Dans l'actionneur selon l'invention :

- deux portions de piste motrices situées dans un même plan et adjacentes l'une à l'autre dans une même partie de rotor sont adaptées pour être alimentées par un courant circulant en sens inverse dans l'une par rapport à l'autre,
- deux portions de piste motrices appartenant respectivement à la première et à la deuxième partie de rotor d'une même paire de partie de rotors et superposées l'une sur l'autre de façon à être soumise au champ d'induction magnétique créé par une même paire d'aimants, sont également adaptées pour être alimentées simultanément par un courant circulant en sens inverse l'une par rapport à l'autre de sorte que lorsque toutes les pistes motrices sont alimentées par un courant, les forces motrices de Laplace engendrées par ce(s) dernier(s) circulant dans les champs d'induction magnétiques créés par la première et deuxième série d'aimants permanents, dans les entrefers entre première et deuxième parties de stator, déplacent une partie de rotor dans un sens opposé par rapport à l'autre partie de rotor d'une même paire selon la direction perpendiculaire à l'épaisseur des entrefers.

Confrontés au problème de limitation intrinsèque de valeur de champ d'induction magnétique créé par un aimant permanent, les inventeurs ont alors été confronté à l'antagonisme mentionné ci-dessus, à savoir proposer un rotor d'actionneur qui puisse être alimenté par des courants très élevés sans risque de démagnétisation des aimants permanents.

L'idée à la base de l'invention a alors consisté à mettre à profit le fait que dans leur cahier des charges de l'application également mentionnée ci-dessus, le rotor ne devait se déplacer angulairement que de quelques degrés. Les inventeurs ont alors pensé d'une part à maximiser les forces motrices de Laplace en choisissant des courants radiaux et des champs d'induction magnétiques axiaux, c'est-à-dire perpendiculaires au plan des conducteurs électrique, et en maximisant les longueurs d'interaction par une géométrie d'aimants et de pistes motrices adaptés, et d'autre part, à superposer physiquement deux rotors de conception identiques, mais alimentés en sens contraire, de façon à ce que les forces de Laplace créées dans chacun des rotors soient opposées et induisent des déplacements angulaires opposés. Cette solution permet, du fait que les rotors sont parcourus dans la zone d'interaction magnétomotrice par des courants en sens inverse, d'avoir un courant total « vu » par les aimants permanents de part et d'autre dans leurs parties de stators respectives nul au premier ordre. Ainsi, le risque de démagnétisation des aimants permanents est repoussé de fait à des valeurs de courant considérablement plus élevées que celles permises dans le cas d'un seul rotor. Il est alors possible de faire passer des courants de très grande intensité, et de développer les couples différentiels recherchés sans risque pour les aimants. Autrement dit, la solution selon l'invention permet d'obtenir un mouvement différentiel, entre deux parties rotors superposées l'une sur l'autre dans un même entrefer. Cette solution est loin d'avoir été évidente car, à priori, jusqu'à présent il n'a jamais été envisagé de faire déplacer deux parties de rotor en sens opposé dans un même actionneur à aimants permanents.

Ainsi, grâce à l'invention, on peut obtenir un actionneur à aimants permanents qui peut être alimenté par des courants électriques très élevés et fournir en conséquence un couple très élevée, et ce avec une durée de vie importante du fait du risque de démagnétisation des aimants permanents évité, et également avec un temps de réaction très court, du fait de la faible inertie des parties de rotor, ainsi que de la géométrie de leurs pistes motrices, qui va être développée.

Les aimants permanents selon l'invention peuvent être collés directement sur les substrats les supportant et éventuellement insérés dans des rainures appropriées et pratiquées dans les substrats des parties de stator. Dans le cas d'utilisation de telles rainures, leur fonction est essentiellement de faciliter le positionnement des aimants lors de l'assemblage de la partie de stator sur laquelle ils sont montés. La profondeur de la rainure est choisie suffisamment faible devant la hauteur d'un aimant de façon à ne pas créer des courts circuits magnétiques. Il en va de même pour la largeur de la rainure: elle est choisie suffisamment faible devant la largeur d'un aimant de façon à ne pas créer des courts circuits magnétiques. En outre, la largeur d'une rainure est choisie pour tenir compte des dispersions des dimensions des aimants dues à leurs procédés de fabrication, usuellement le moulage.

Selon le mode de réalisation préféré, les substrats supportant les aimants permanents sont en matériau ferromagnétique, de préférence encore, à fort coefficient de perméabilité magnétique relative $\mu_r$, ce qui permet de refermer les lignes de champ des circuits magnétiques et de faciliter, voir dans certains cas rendre inutile, le collage des aimants permanents grâce à l'adhérence magnétique qu'ils exercent alors sur les substrats.

Selon l'invention, on assure avantageusement la protection mécanique des aimants permanents et des parties de rotor en intercalant entre deux aimants adjacents d'une même partie de stator, un bouclier en matériau non-ferromagnétique et d'une épaisseur suffisante pour empêcher tout contact mécanique entre les surfaces exposées des aimants et les parties de rotor qui leur sont les plus proches. Chaque bouclier en matériau non-ferromagnétique présente des propriétés tribologiques permettant de minimiser les forces de frottement éventuelles et l'usure mécanique. De manière préférée, ces boucliers font partie d'une seule pièce mécanique fixée sur la partie de stator avec laquelle elle est en contact. De préférence, ces boucliers sont en matériau isolant électrique. De manière préférée, ces boucliers sont réalisés à partir d'un fluoropolymère comme par exemple le polytétrafluoroéthène, désigné usuellement par l'acronyme PTFE.

Selon une variante préférée, chaque partie de rotor comprend une seule piste, les portions radiales de piste motrices étant reliées entre elles par des portions tangentielles en formant des créneaux en vue de face de la partie de rotor.

Selon un mode de réalisation préféré, une partie de rotor est réalisée par un circuit imprimé multicouches, une piste étant constituée par un nombre pair de couches en matériau conducteur électrique empilées les unes sur les autres adaptées pour être alimentées par un courant circulant dans le même sens. De préférence, le nombre de couches en matériau conducteur électrique empilées est égal à quatre.

Le substrat d'une partie de rotor est avantageusement une plaque en pré-imprégné, la (les) couches en matériau conducteur électrique est (sont) en cuivre et est (sont) recouverte d'une couche de finition en matériau isolant électrique.

Selon un mode de réalisation avantageux, le dispositif disjoncteur mécatronique comprend au moins deux paires distinctes de deux parties de rotor superposées l'une sur l'autre dans les entrefers entre la première et deuxième partie de stator.

Deux parties de rotor superposées l'une sur l'autre et appartenant à deux paires distinctes peuvent alors être adaptées pour se déplacer dans un même sens lorsque toutes les pistes sont alimentées par un courant. Alternativement, deux parties de rotor superposées l'une sur l'autre et appartenant à deux paires distinctes peuvent être adaptées pour se déplacer dans un sens opposé l'une par rapport à l'autre lorsque toutes les pistes sont alimentées par un courant.

De préférence, toutes les pistes des parties de rotor sont alimentées en série électrique par le même courant.

La connexion électrique entre parties de rotor se fait avantageusement par des fils conducteurs flexibles.

De préférence, le nombre d'aimants permanents dans une série de chaque partie de stator est pair.

L'invention concerne également un ensemble d'actionneurs comprenant au moins deux actionneurs à aimants permanents tel que décrits ci-dessus et superposés l'un sur l'autre, dans lequel la deuxième partie de stator de l'un des deux actionneurs constitue également la première partie de stator de l'autre des deux actionneurs, dite partie de stator intermédiaire, ladite partie de stator intermédiaire comprenant une même série d'aimants permanents avec chaque pôle apparent sur une face d'un même substrat. Toutes les pistes des parties de rotor sont alors alimentées de préférence en série électrique par le même courant I avec une connexion électrique entre parties de rotor se fait par des fils conducteurs flexibles.

Les parties de rotor des deux actionneurs sont de préférence adaptées pour se déplacer dans le même sens de rotation sont reliées mécaniquement à leur périphérie par des brides rigides chacune constituant une bride de connexion. Deux brides rigides adjacentes l'une à l'autre sont avantageusement reliées à des disques de rotor adaptés pour se déplacer dans un sens de rotation opposé l'un par rapport à l'autre, chacune des deux brides étant reliée mécaniquement à au moins une bielle de déplacement, chacune des deux bielles de déplacement étant reliée mécaniquement à un même élément mécanique, de sorte que le déplacement en rotation des disques de rotor dans un sens opposé génère un déplacement en translation de l'élément mécanique. Selon une variante préférée, chacune des deux brides adjacentes est reliée mécaniquement à deux bielles de déplacement elles-mêmes reliées mécaniquement chacune à un élément mécanique distinct de sorte que le déplacement en rotation des disques de rotor dans un sens radial opposé génère un déplacement en translation des deux éléments mécaniques distincts dans un sens de translation opposé l'un par rapport à l'autre.

L'invention concerne également un appareillage électrique, destiné à réaliser l'interruption-sectionnement d'un courant électrique, comprenant au moins un ensemble d'actionneurs qui vient d'être décrit et dans lequel un élément mécanique est solidaire d'un contact mobile d'une ampoule à vide.

L'invention concerne enfin l'utilisation d'un appareillage électrique décrit précédemment en tant que partie d'un dispositif disjoncteur mécatronique destiné à couper des courants continus sous haute tension.

**BRÈVE DESCRIPTION DES DESSINS**

D'autres avantages et caractéristiques de l'invention ressortiront mieux à la lecture de la description détaillée faite en référence aux figures suivantes parmi lesquelles :

- la figure 1 est une représentation schématique en vue de coupe montrant le principe de réalisation d'un actionneur à aimants permanents selon l'invention ;
- la figure 1A montre un actionneur selon le même mode que celui de la figure 1 mais selon une variante de réalisation ;
- la figure 2A est une représentation schématique en vue de coupe montrant un actionneur selon l'invention, selon un mode de réalisation ;
- la figure 2B montre un actionneur selon le même mode que celui de la figure 2A mais selon une variante de réalisation ;
- la figure 3 montre un ensemble de deux actionneurs selon un mode de réalisation avec un couple moteur augmenté par rapport au mode de réalisation selon les figures 2A et 2B ;
- les figures 4A et 4B sont des représentations schématiques en vue de coupe montrant une partie d'actionneur selon deux modes différents et illustrant l'orientation des champs d'induction magnétiques dans les aimants permanents, des sens des courants dans les pistes motrices des rotors, les sens de rotation des disques de rotor, les efforts de répulsions inter-disques de rotors et donc les efforts sur les aimants permanents ;
- la figure 5 est une vue schématique en vue de coupe d'une variante de réalisation d'une partie de rotor d'un actionneur selon l'invention ;
- les figures 6A et 6B sont des vues respectivement de face et en perspective d'une partie de rotor d'un actionneur selon l'invention ;
- la figure 7 est une vue de face illustrant une variante de réalisation d'une partie de rotor d'un actionneur selon l'invention ;
- la figure 7A est une vue de détail de la partie de rotor selon la variante de la figure 7 ;
- la figure 8 est une représentation de détail en vue de perspective d'un ensemble de deux actionneurs selon l'invention illustrant leur agencement relatif et une connexion mécanique entre eux ;
- la figure 9 est une représentation de détail en vue de face de la connexion mécanique entre un ensemble d'actionneurs selon l'invention et des éléments mécaniques à déplacer ;
- les figures 10A à 10C sont des représentations de détail en vue de coupe de la connexion mécanique entre un ensemble d'actionneurs selon l'invention et des contacts mobile d'ampoules à vide, illustrant respectivement la position de fermeture, intermédiaire et d'ouverture de ces dernières.

**EXPOSÉ DÉTAILLÉ DE MODES DE RÉALISATION PARTICULIERS**

Par souci de clarté, les mêmes symboles utilisés dans l'ensemble des figures ont les mêmes significations techniques.

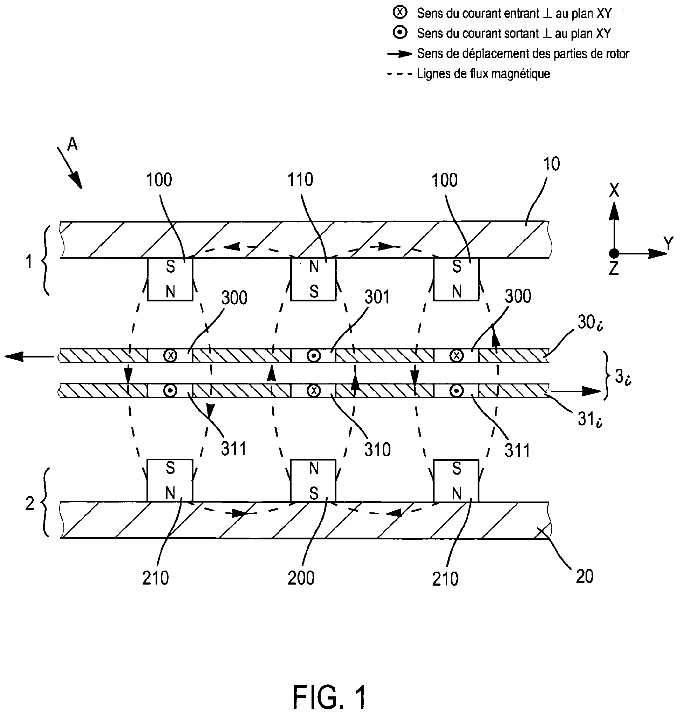

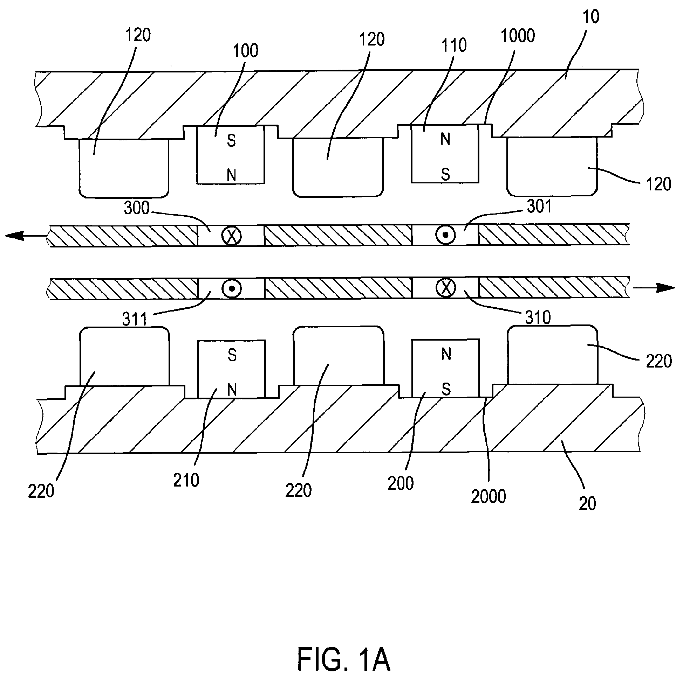

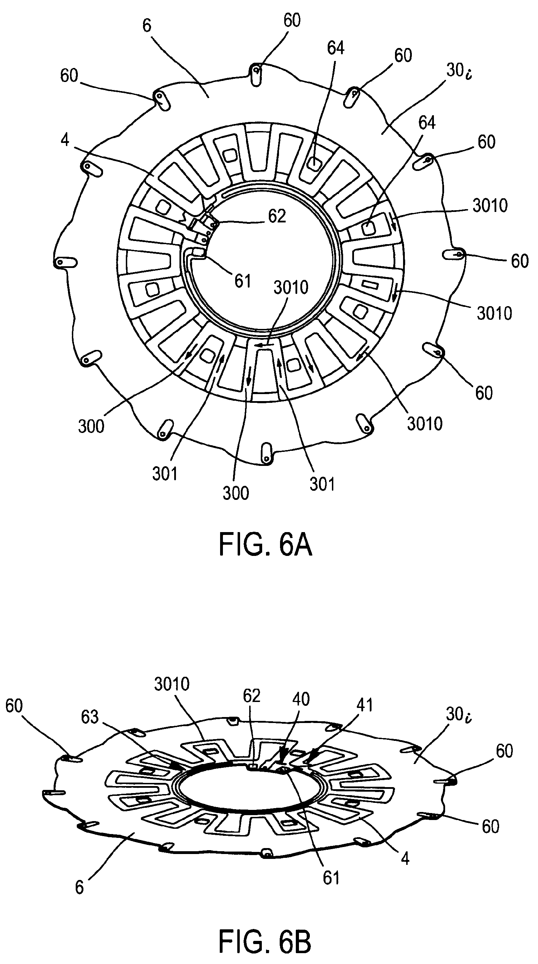

Un actionneur selon l'invention qui va être décrit peut aussi bien fonctionner en tant qu'un actionneur linéaire, comme schématisé en figures 1 à 3, ou en tant qu'un actionneur rotatif, comme illustré sous forme de disque (couronne) en figures 6A, 6B, 7A, 7B et 8. Un actionneur linéaire selon l'invention est ainsi en quelque sorte un mode de réalisation limite d'un actionneur rotatif selon l'invention avec un rayon qui tend vers l'infini. Aussi, par souci de clarté et de simplification, on décrira l'invention au travers de ce cas limite et on représente dans les figures 1 à 3 un repère orthogonal X, Y, Z, dans lequel X, Y et Z désignent les directions respectivement axiales, tangentielles et radiales, l'axe X du repère étant parallèle à l'axe de symétrie des surfaces de stators sur lesquelles sont fixés les aimants permanents, l'axe Z du repère étant dans le plan de symétrie de l'un des aimants.

Autrement dit, sauf mentions contraires explicites on mentionne les sens de courant et sens de déplacement des parties de rotor selon ces directions sans se placer dans un système de repère cylindrique qui serait plus approprié dans un actionneur rotatif. Dans un tel système de repérage, et conformément à l'invention, les champs d'induction magnétique sont orientés parallèlement à la direction X, les sens de courant à considérer dans les zones d'interaction avec le champ d'induction magnétique sont selon un vecteur radial parallèle à la direction Z, tandis que les sens de déplacement des parties de rotor sont selon un vecteur orthoradial, ou tangentiel, parallèle à la direction Y. Autrement dit également, dans un actionneur rotatif selon l'invention, lorsqu'on mentionne que des parties de rotor se déplacent en sens opposé l'une par rapport à l'autre, cela signifie dans un sens de rotation opposé, ou encore de manière contrarotative.

Par ailleurs, Comme libellé en légende de la **figure 1,** on a indiqué par :

- une croix le sens d'un courant entrant et orthogonal au plan XY,
- un point le sens d'un courant sortant et orthogonal au plan XY,
- une flèche le sens de déplacement d'une partie de rotor ;
- des pointillés les lignes de flux magnétique créés par les aimants permanents.

De même, on a désigné par un même indice 1 ou 2 ou 3 ou 4, deux parties de rotor d'une même paire de rotor au sens de l'invention, c'est-à-dire se déplaçant, sous l'effet des forces motrices de Laplace, en sens opposé dans la direction tangentielle, c'est-à-dire dans le sens de l'axe Y comme détaillé par la suite. Ainsi, dans la désignation générale, une paire de rotor $3i$ comprend les deux parties $30_i$, $31_i$.

Par convention, également par souci de clarté, on désigne par le chiffre 0 une partie de rotor 30 se déplaçant vers la gauche sur les figures, et par le chiffre 1 une partie de rotor 31 se déplaçant vers la droite sur les figures.

Par convention, également par souci de clarté, on désigne par la référence 100 ou 200 un aimant permanent orienté de telle sorte que le pôle Nord est le plus proche des entrefers, tandis que les références 110 ou 210 désignent chacune un aimant permanent orienté de telle sorte que le pôle Sud est le plus proche des entrefers. Ainsi, un substrat 10 ou 20 comprend une série en alternance d'aimants permanents 100, 110 ou 200, 210. On précise aussi que lorsque deux entrefers encadrent un aimant permanent on désigne celui-ci par les deux références 100, 210 ou 110, 200.

Enfin par convention, également par souci de clarté, on désigne par la référence 300 ou 310 une portion de piste motrice conductrice électrique dans laquelle le courant est apte à circuler est entrant et orthogonal au plan XY, tandis que les références 301 ou 311 désignent chacune une portion de piste motrice conductrice électrique dans laquelle le courant est apte à circuler est sortant et orthogonal au plan XY. Il va de soi que cette convention suppose un sens de courant d'alimentation fixé et qu'en cas d'inversion de sens, tous les sens de rotation des parties de rotor indiqués sont alors inversés.

Un actionneur A selon l'invention est représenté schématiquement en figure 1.

Il comprend tout d'abord une première partie de stator 1 formée dans un premier substrat 10 en matériau de préférence ferromagnétique, et comprenant une première série d'aimants permanents 100, 110 apparents sur une face du premier substrat et espacés angulairement régulièrement les uns des autres. Deux aimants permanents de la première série adjacents l'un de l'autre sont d'orientation inversée 100, 110 dans le sens de l'épaisseur du premier substrat.

En regard de la première partie de stator 1 est agencée parallèlement une deuxième partie de stator 2 formée dans un deuxième substrat 20 en matériau de préférence ferromagnétique, et comprenant une deuxième série d'aimants permanents 210, 200 apparents sur une face du deuxième substrat 20 et espacés angulairement régulièrement les uns des autres et selon le même espacement angulaire que pour la première série d'aimants permanents. Deux aimants permanents de la deuxième série adjacents l'un de l'autre sont d'orientation inversée 210, 200 dans le sens de l'épaisseur du deuxième substrat. L'agencement relatif entre première 1 et deuxième 2 parties de stator est tel qu'un pôle S ou N d'un aimant de la deuxième série 210 ou 200 de la deuxième partie de stator 2 est en regard d'un pôle inversé N ou S d'un aimant de la première série 100 ou 110 de la première partie de stator 1, un pôle N étant toujours en regard d'un pôle S: on crée ainsi des champs d'induction magnétique intenses dans les entrefers entre première et deuxième parties de stator. Ils forment ainsi un ensemble de zones d'interactions magnéto motrices avec des champs d'induction magnétique parallèles à l'axe Z, et donc orthogonaux au plan YZ. Du fait de l'orientation inversée de pôle entre deux aimants permanents adjacents d' une partie de stator, le sens du champ d'induction magnétique résultant est inversé ; mais comme les courants circulant dans deux pistes motrices adjacentes d'une même partie de rotor sont eux aussi inversés l'un par rapport à l'autre, et que le nombre de piste motrices d'une même couche d'une même partie de rotor est égale au nombre d'aimants d'une partie de stator, les forces motrices de Laplace exercent sur les pistes motrices des éléments de couples additifs, résultant au niveau de chaque partie de rotor en un couple dont la valeur est égale à la somme des couples exercés sur chacune de ses pistes motrices.

Autrement dit, les aimants permanents en regard les uns des autres forment des colonnes magnétiques espacées les unes des autres, dont les sens des champs d'induction magnétiques sont alternés, le flux d'induction magnétique d'une colonne se refermant dans les deux colonnes adjacentes par l'intermédiaire des aimants et des substrats des parties de stator qui les encadrent. Cette fermeture des lignes de flux magnétique permet d'assurer le maintien de l'aimantation des aimants permanents au cours du temps. C'est pourquoi le mode de réalisation préféré est celui pour lequel les substrats des parties de stator sont en matériaux ferromagnétiques, tels que les alliages de fer doux, l'épaisseur du substrat étant alors optimisée pour assurer une fermeture des lignes de champ sans dégradation de l'intensité du champ d'induction magnétique dans les colonnes d'interaction. On précise que le champ d'induction magnétique délivré par les aimants permanents étant par nature un champ magnétique continu, il n'est pas nécessaire de réaliser les parties de stators à partir de tôles magnétiques feuilletées assemblées entre elles, car les éventuels courants de Foucault pouvant apparaître lors de la mise en oeuvre de l'actionneur selon l'invention sont négligeables voir inexistants. En conséquence, dans un mode de réalisation préféré les substrats des parties de stator sont fabriqués à partir de pièces pleines, c'est-à-dire monolithiques.

Pour des applications spécifiques nécessitant l'emploi de parties de stator en matériaux amagnétiques, les aimants permanents étant fixés (supportés) par un substrat rigide dans un matériau de faible coefficient de perméabilité magnétique $\mu_r$, typiquement égal à 1, comme par exemple dans le cas de substrats en matière plastique isolante, la fermeture des lignes de champ d'induction magnétiques devient critique, et les intensités des champs d'induction magnétiques utilisables sont nettement plus faibles que dans le cas de parties de stator en matériau ferromagnétique.

De préférence, le nombre d'aimants permanents en parallèle est pair. Les colonnes magnétiques sont espacées entre elles et délimitent une forme générale de tube de champ magnétique. L'espacement entre colonnes magnétiques, c'est-à-dire l'espacement choisi entre deux aimants permanents adjacents est à déterminer en fonction de l'application visée et notamment du couple moteur visé. On veille avantageusement à réaliser un compromis entre le prix des aimants permanents et le couple moteur visé.

Un substrat 10 ou 20 sert donc de support mécanique d'aimants permanents 100, 110 ou 200, 210, ces derniers constituant les éléments inducteurs de champ d'induction magnétique.

De préférence, la première 1 et deuxième 2 parties de stator sont identiques, avec un espacement selon un pas angulaire constant entre deux aimants permanents, et sont donc décalées l'une par rapport à l'autre pour réaliser la correspondance entre pôles d'aimants permanents évoquée ci-dessus. Avantageusement, tous les aimants permanents sont identiques et sont des aimants au Néodyme Fer Bore. Ils peuvent être également en matière organique, convenablement revêtus d'une couche de passivation destinée à les protéger contre la corrosion. Plus généralement, ils peuvent être également obtenus à partir d'autres matériaux tels que le Samarium Cobalt, des ferrites, ou même réalisés à partir de matière organique présentant des propriétés ferromagnétiques.

Dans l'espace entre la première 1 et deuxième 2 parties de stator est agencée une paire $3_i$ de deux parties de rotor $30_i$, $31_i$ superposées l'une sur l'autre. Dans un mode de réalisation préféré qui sera décrit ci-après, le bobinage de chaque partie de rotor $30_i$, $31_i$ est constitué d'une piste métallique conductrice, préférentiellement en cuivre, distribuée au sein des couches d'un circuit imprimé multicouches. Cette piste continue au niveau électrique est essentiellement formée d'une part d'un ensemble de portions de pistes motrices orientées radialement selon l'axe Z du repère orthogonal et qui de par leur positionnement géométrique seront soumises aux champs d'induction magnétique générés par les aimants et seront le siège des forces de Laplace lorsqu'elles seront parcourues par le courant approprié, et d'autre part d'un ensemble de portions de pistes d'interconnexion, non soumises au premier ordre aux champs d'induction magnétique générés par les aimants, et destinées à assurer la continuité électrique du bobinage de la partie de rotor considérée. Les portions de piste motrices 300, 301 ou 311, 310 de largeur unitaire sensiblement proche mais légèrement inférieure à celle des aimants permanents 100, 200, 110, 210 selon la direction radiale Y, afin que dans les positions relatives extrêmes des portions de rotor contrarotatives, les portions de piste motrices 300, 301 ou 311, 310 d'une part soient toujours sous l'influence du champ d'induction magnétique généré par les aimants entre lesquels elles sont positionnées, et que d'autre part les portions de piste motrices respectivement 300 et 311 ou 301 et 310 se recouvrent suffisamment pour que l'effet de neutralisation des champs magnétiques qu'elles engendrent soit effectif, évitant ainsi tout risque de démagnétisation des aimants permanents 100, 200, 110, 210.

Dans un mode de réalisation préféré, les portions de pistes motrices ont une largeur comprise entre 5 mm et 20 mm, et leur épaisseur est comprise entre 25 $\mu$m et 100 $\mu$m. Les portions de pistes d'interconnexion ont quant à elle une largeur choisie de façon à optimiser la résistance interne du bobinage ainsi constitué en réalisant un compromis entre une faible largeur résultant en un faible encombrement au prix d'une résistance électrique interne élevée et une grande largeur résultant en une plus faible résistance interne au prix d'un encombrement plus grand. Dans un mode de réalisation préféré, les portions de pistes d'interconnexion ont une largeur comprise entre 5 mm et 20 mm, et leur épaisseur est comprise entre 25 $\mu$m et 100 $\mu$m.

On rappelle que les portions de piste motrices sont espacées angulairement régulièrement les unes des autres selon le même espacement angulaire que pour la première et deuxième série d'aimants permanents.

Selon l'invention, deux portions de piste 300, 301 ou 311, 310 adjacentes l'une à l'autre dans une même partie de rotor $30_i$ ou $31_i$ sont adaptées pour être alimentées par un courant circulant en sens inverse dans l'une par rapport à l'autre. Deux portions de piste 300, 311 ou 301, 310 superposées l'une sur l'autre d'une même paire $3_i$ de partie de rotors sont adaptées pour être simultanément alimentées par un courant circulant en sens inverse l'une par rapport à l'autre.

Afin d'assurer la protection des aimants permanents 100, 110 et 200, 210 et des parties de rotor 30i, 31i, on intercale entre deux aimants adjacents d'une même partie de stator, un bouclier 120, 220 en matériau non-ferromagnétique, comme montré en figure 1A. Ce bouclier 120, 220 a une épaisseur suffisante pour empêcher tout contact mécanique entre les surfaces exposées des aimants et les parties de rotor qui leurs sont les plus proches. Il présente en outre des propriétés tribologiques permettant de minimiser les forces de frottement et l'usure mécanique. De manière préférée, ces boucliers 120, 220 font partie d'une seule pièce mécanique fixée sur la partie de stator avec laquelle elle est en contact. De préférence, ces boucliers sont en matériau isolant électrique. De manière préférée, ces boucliers sont réalisés à partir d'un fluoropolymère comme par exemple le polytétrafluoroéthène connu sous l'acronyme PTFE.

Sur cette figure 1A, on peut d'ailleurs voir une variante avantageuse selon laquelle les aimants permanents selon l'invention sont collés directement sur les substrats 10, 20 les supportant et sont en outre insérés dans des rainures appropriées 1000, 2000. De telles rainures 1000, 2000 ont pour fonction essentiellement de faciliter le positionnement des aimants lors de l'assemblage de la partie de stator sur laquelle ils sont montés.

Selon le mode préféré de l'invention, le circuit imprimé multicouche servant de support au bobinage d'une partie de rotor est lui-même réalisé comme usuellement pour des circuits imprimés destinés à l'électronique, à savoir réalisé par la gravure et l'assemblage par collage et mise sous pression de plusieurs sous ensembles de substrats en fibre de silice connus dans le métier sous le nom de préimprégné. Le matériau de ces préimprégnés est choisi de façon à ce que ses propriétés mécaniques, notamment son module d'Young, leur confèrent une grande résistance aux efforts de traction et de compression, impulsionnel ou continus, exercés dans des directions contenues dans leur plan.

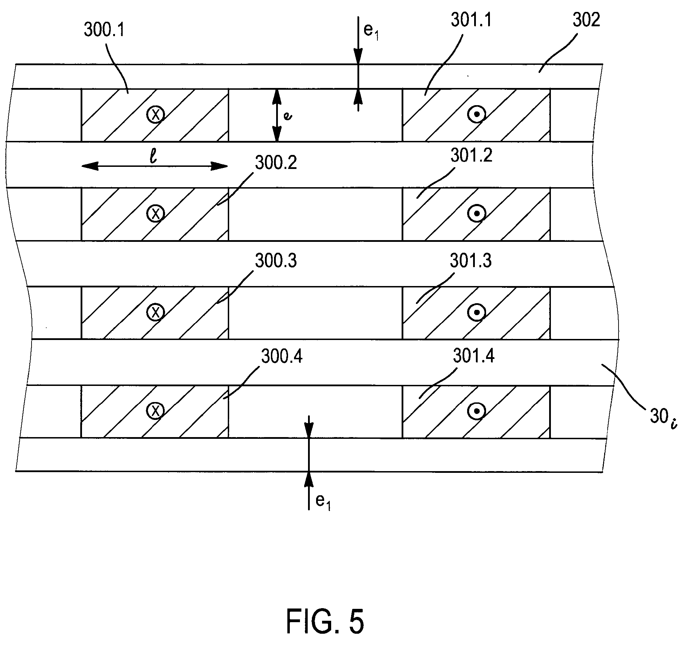

Comme mieux détaillé en relation avec la **figure 5,** selon un mode préféré de l'invention, ce circuit imprimé multicouche est constitué de quatre couches de conducteurs électriques 301.1, 301.2, 301.3, 301.4 dédiés aux portions de pistes motrices et aux portions de pistes d'interconnexion, et il est recouvert de part et d'autre d'une couche de protection dite couche de fermeture destinée d'une part à assurer l'isolement électrique des portions de pistes les plus externes, et d'autre part à diminuer les efforts de frottement lors du glissement d'une portion de rotor par rapport à une autre voisine ou par rapport aux boucliers protecteurs 120, 220 des aimants permanents tels que précisés ci-dessus.

L'épaisseur des portions de pistes motrices et d'interconnexion d'une part, et l'épaisseur des pré-imprégnés constituant une portion de rotor, sont choisis de façon à assurer d'une part une transmission fiable des efforts mécaniques des portions de piste motrice vers le substrat de la portion de rotor par les différents pré-imprégnés, et à procurer à l'ensemble une épaisseur suffisamment faible pour que plusieurs portions de rotor ainsi constituées puissent être insérées dans un même entrefer entre deux parties de stators en vis-à-vis.

De manière préférée, l'épaisseur totale d'une portion de rotor ainsi constituée est comprise entre 0,5mm et 3,2mm.

Par ailleurs, les aimants permanents agencés en regard les uns des autres sont soumis à une pression due à l'énergie magnétique qu'ils stockent dans l'espace, l'essentiel de cette énergie étant contenue dans les colonnes magnétiques délimitées par les aimants. Cette pression notée « P » peut être calculée en supposant que l'intensité notée « B » du champ d'induction magnétique est uniforme au sein d'une colonne magnétique. On obtient alors la formule suivante :

$$P = B^2 / (2 . \mu o),$$

dans laquelle $\mu$o désignant la perméabilité du vide.

Chaque aimant permanent est ainsi soumis à une force, qu'il transmet à la partie de stator sur laquelle il est fixé, et qui tend à le rapprocher de l'aimant avec lequel il est en vis-à-vis dans la colonne magnétique qu'ils créent tous deux. Lorsque le nombre d'aimants d'une partie de stator est important, et lorsque la section des colonnes magnétiques dans un plan parallèle au disque auxquelles appartiennent les aimants est elle aussi importante, alors la somme des forces d'attraction exercées par chaque aimant d'une partie de stator peut devenir considérable, une valeur de l'ordre de 10 000N étant courante. Autrement dit, on peut obtenir un couple moteur très élevé.

Pour cette raison, dans un mode de réalisation préféré de l'invention, la distance entre deux parties de stator en vis-à-vis est maintenue constante au moyen d'entretoises en matériaux amagnétiques, réparties autour de l'axe de symétrie du disque des parties de stator auxquelles appartiennent les aimants. On veille à ce que le nombre et la section des entretoises soient suffisants pour que les deux parties de stator ne subissent pas de déformations et restent parallèles entre elles et à la distance souhaitée.

Dans un mode de réalisation préféré de l'invention, ces entretoises sont positionnées dans les zones les plus proches possibles de celles où s'exercent les forces d'attraction entre parties de stator, afin de prévenir les risques de déformation statique de leurs substrats. En conséquence, on choisit judicieusement de munir les parties de rotor de trous, ou ouvertures, permettant le passage desdites entretoises. Ces trous ont de préférence une forme et des dimensions adaptées afin de permettre un libre débattement des parties de rotor sans être gêné par les entretoises, c'est-à-dire sans que celles-ci ne deviennent des butées néfastes.

Dans un mode de réalisation préféré de l'invention, ces trous sont positionnés et usinés avec précision afin d'effectuer un pré-positionnement des parties de rotor dans les entrefers, ce prépositionnement assurant un premier niveau de concentricité entre l'axe de rotation des parties de rotor et l'axe de symétrie des disques des parties de stator sur lesquelles sont fixés les aimants. Un tel pré-positionnement offre suffisamment de jeu mécanique pour permettre le couplage des parties de rotor à leur chaine cinématique les liant aux interrupteurs mécaniques qu'ils doivent manoeuvrer sans engendrer de condition d'hyperstatisme.

Le fonctionnement d'un actionneur A selon l'invention qui vient d'être décrit est alors le suivant: lorsque toutes les pistes sont alimentées par un courant, les forces motrices de Laplace engendrées par ce dernier circulant dans les champs d'induction magnétique créés par la première et deuxième série d'aimants permanents, dans les entrefers entre première 1 et deuxième partie 2 de stator, déplacent une partie de rotor $30_i$ dans un sens opposé par rapport à l'autre partie de rotor $31_i$ selon la direction tangentielle Y.

Selon une variante, le courant d'alimentation est le même pour toutes les pistes en matériau conducteur électrique, constituant le bobinage de chaque partie de rotor, et les deux parties de rotor sont alimentées en série l'une avec l'autre. En outre, avantageusement, le positionnement angulaire relatif de chacune des deux parties de rotor est judicieusement choisi de telle façon que les courants parcourant deux portions de pistes motrice appartenant respectivement à l'une et à l'autre des deux parties de rotor et situés dans une même colonne magnétique sont dans des sens opposés. On veille bien entendu à ce que le positionnement respectif des portions de pistes motrices, des aimants et des entretoises maintenant la distance entre les deux parties de stator soit également assuré.

Un tel actionneur selon l'invention peut être alimenté par des courants de valeur très élevée car le courant total « vu » par chacun des aimants permanents est nul dans une colonne magnétique formée par les aimants en regard 100, 210 ou 110, 200. Leur risque de démagnétisation est donc très fortement réduit. Avec des courants très élevés on obtient un couple moteur très élevé pour un actionneur A selon l'invention.

En pratique, un actionneur selon l'invention est avantageusement prévu pour avoir de faibles déplacements des parties de rotor, de l'ordre de quelques millimètres (mm), ou un débattement angulaire de quelques degrés. De faibles déplacements peuvent être suffisants pour déplacer un élément mécanique comme un contact mobile d'un interrupteur mécanique comme décrit ci-après en détail. En pratique également, on définit l'actionneur selon l'invention afin que le débattement angulaire soit tel que, dans la position extrême déplacée de chaque partie de rotor, les portions 300, 311 ou 301, 310 de piste conductrices se trouvent toujours dans une zone en regard des aimants permanents.

Pour augmenter le couple moteur d'un actionneur A selon l'invention, on peut augmenter le nombre de parties de rotors $3_i$ dans les mêmes entrefers entre les deux parties 1, 2 de stator. On veille avantageusement à trouver une distance optimale entre parties de rotor en faisant un compromis adéquat entre valeur des champs d'induction magnétique à atteindre et nombre de rotors dans les entrefers. Dans un mode préféré de réalisation de l'invention, le nombre de parties de rotors au sein d'un même entrefer est un nombre pair compris entre 4 et 8, l'épaisseur de l'entrefer étant comprise entre 4 et 10 millimètres.

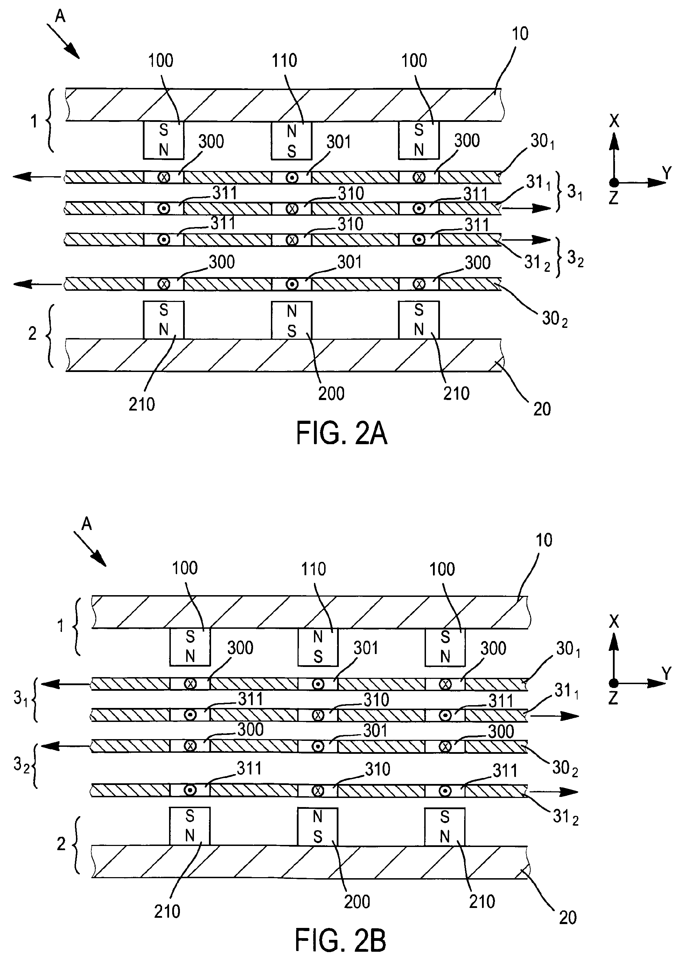

En **figures 2A et 2B,** on a représenté deux variantes différentes d'augmentation du couple moteur avec deux paires $3_1$, $3_2$ de rotor de deux parties $30_1$, $31_1$ et $30_2$, $31_2$ empilées l'une sur l'autre.

Dans la variante de la figure 2A, deux parties de rotor $31_1$, $31_2$ superposées l'une sur l'autre et appartenant aux deux paires distinctes $3_1$, $3_2$ sont adaptées pour se déplacer dans un même sens lorsque toutes les pistes sont alimentées par un courant.

Alternativement, dans la variante de la figure 2B, les deux parties de rotor $31_1$, $31_2$ superposées l'une sur l'autre et appartenant aux deux paires distinctes $3_1$, $3_2$ sont adaptées pour se déplacer dans un sens opposé l'une par rapport à l'autre lorsque toutes les pistes sont alimentées par un courant.

Ces alternatives permettent de résoudre différemment le compromis entre d'une part la gestion des efforts de répulsion ou attraction entre parties de rotor, efforts qui ont un effet bénéfique ou négatif sur les frottements relatifs entre parties de rotor, selon leurs sens de rotation relatifs, et l'auto compensation des champs d'induction magnétiques engendrées par les courants parcourant chaque portion de piste motrice.

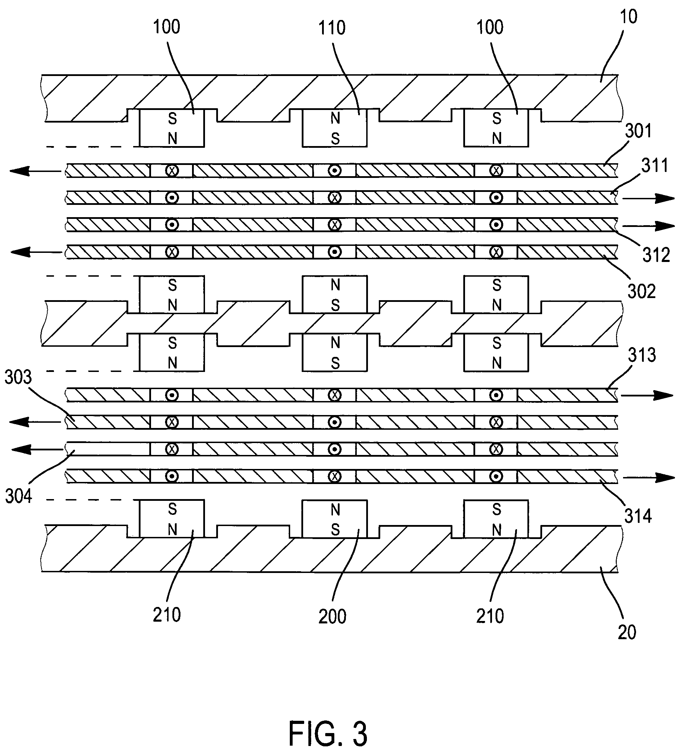

En ce qui concerne l'alimentation électrique, on peut alimenter en série ou en parallèle électrique deux parties de rotor d'une même paire $3_1$, $3_2$. On peut également alimenter en série ou en parallèle deux paires $3_1$, $3_2$ d'un même entrefer (figure 2A, figure 2B ou figure 3).

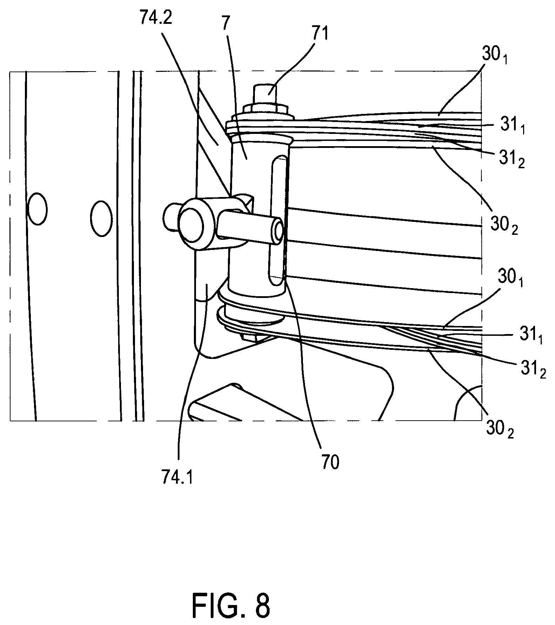

La **figure 3** montre un mode de réalisation préféré dans lequel les rotors de l'actionneur sont constitués respectivement de deux paires de quatre parties de rotor $30_1$, $30_2$ ; $30_3$, $30_4$ ; $31_1$, $31_2$ ; $31_3$ et $31_4$, réparties en deux entrefers. L'agencement des parties de rotor au sein d'un même entrefer est celui de la figure 2A. La partie intermédiaire de stator 12 située entre les deux entrefers est essentiellement utilisée comme un relais magnétique, c'est-à-dire que sa fonction n'est plus de refermer les lignes de champ d'induction magnétique. Les aimants permanents situés de part et d'autre de son plan de symétrie assurent la continuité d'une colonne magnétique du premier entrefer vers la colonne magnétique du second entrefer, ces colonnes se refermant via les parties de stator 10 ou 20 situées de part et d'autre de la partie de stator intermédiaire ou centrale 12. Cet agencement préféré présente plusieurs avantages. D'une part, elle procure une augmentation de couple moteur du fait de l'utilisation d'un nombre égale à huit parties de rotors au lieu de quatre dans le cas de la figure 2A. D'autre part, comme illustré par la **figure 8,** les parties de rotor destinées à tourner dans un même sens donné sont réparties à part égale dans chaque entrefer. Il est ainsi possible, par un choix judicieux des distances entre les plans de symétrie de chaque entrefer, et par l'utilisation d'entretoises reliant mécaniquement les parties de rotor destinées à se déplacer dans un même sens, de conférer aux parties de rotor ainsi constituées une rigidité très supérieure à celle envisageables dans les cas des figures 2A et 2B. Ainsi, non seulement l'actionneur selon l'invention est capable de développer des couples extrêmement élevés, de l'ordre de plusieurs milliers de Nm, mais aussi de les transmettre aux objets devant être mis en mouvement sans risque d'usure ni de dégradation.

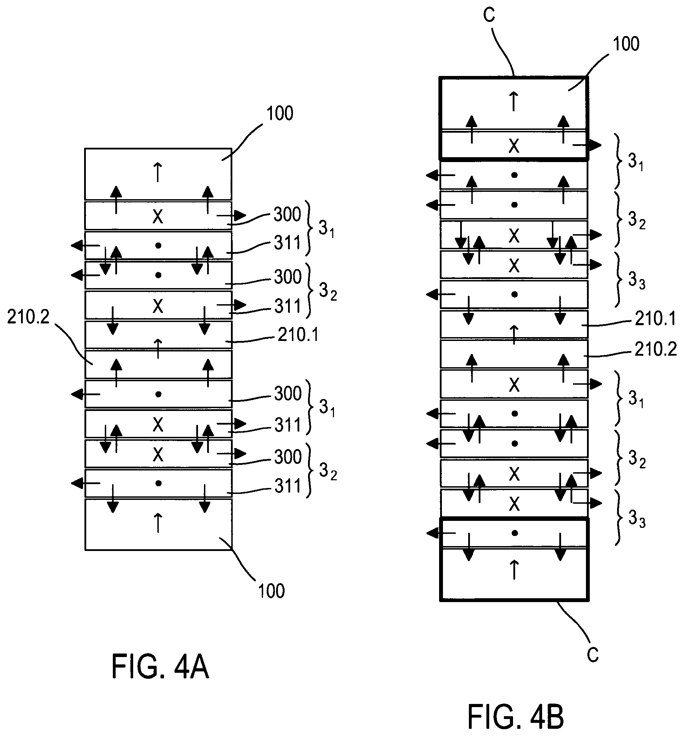

Ainsi, le mode de la figure 3 est préféré, comme expliqué ci-dessus en référence aux **figures 4A et 4B** qui montrent en détail au niveau d'une même colonne magnétique 100, 210, 100 avec deux actionneurs A1, A2 superposés l'un sur l'autre, la répartition des flux magnétiques et des forces motrices de Laplace. Quand deux parties de rotor superposées l'une sur l'autre se déplacent dans des sens opposés et se touchent, ils peuvent provoquer des frottements et ainsi se détériorer. Cependant, lorsque deux parties de rotor superposées l'une sur l'autre enferment un champ d'induction magnétique à leur interface, celui-ci a tendance à les repousser mutuellement.

Aussi, les variantes de réalisation préférées sont celles qui réduisent à la fois le frottement et les efforts répulsifs entre parties de rotor superposées l'une sur l'autre. La figure 4A représente une telle variante préférée avec un nombre égal à un, c'est-à-dire un nombre impair, de couple de parties de rotor superposées immédiatement l'une sur l'autre et qui se déplacent dans le même sens. La figure 4B représente également une telle variante préférée mais avec un nombre égal à deux, c'est-à-dire un nombre pair de couple de parties de rotor superposées immédiatement l'une sur l'autre qui se déplacent dans le même sens. On précise ici que les zones où les champs d'induction magnétiques créés par les parties de rotor sont d'intensité élevée, i.e. plus importante que sur le reste d'une colonne magnétique, sont indiquées sur ces figures 4A et 4B par des lignes larges foncées. On précise également que les flèches verticales représentent les efforts agissant selon le sens de la hauteur d'un entrefer. Ainsi, une partie de rotor qui est encadrée de part et d'autre par une partie de rotor est soit repoussée de celle-ci, soit sans mouvement relatif par rapport à celle-ci : le frottement est alors réduit à son minimum. Une partie de rotor qui est adjacente avec une partie de stator peut transmettre un effort (couple) à cette dernière selon la direction X, c'est-à-dire selon l'axe des actionneurs. Les agencements selon les figures 4A et 4B permettent de compenser ces efforts axiaux néfastes autant que possible selon la direction X des actionneurs. En effet, quel que soit le sens du courant choisi, les aimants permanents 100 ou 210 des parties de stator ne subissent de manière magnétique ni force résultante, ni couple résultant selon la direction X : comme symbolisé les flèches verticales sur les aimants 100 ou 210 s'annihilent globalement. En effet, d'une part entre parties de rotor et aimants permanents les efforts sont faibles et négligés, et d'autre part entre deux parties de rotor adjacentes les efforts subis sont indépendants du sens du courant lui-même. Par ailleurs, on rappelle que la présence de boucliers 120, 220 en matériaux ayant de bonnes propriétés tribologiques d'une part empêche tout contact direct d'une partie de rotor avec un aimant permanent, et d'autre part facilite le glissement relatif de cette partie de rotor sur les boucliers.

Cela concerne les aimants permanents 100 ou 210 qui ne sont pas à une extrémité des actionneurs, c'est-à-dire aux extrémités des séries d'aimants permanents, ce qui est donc le cas de tous les aimants d'un actionneur selon l'invention fonctionnant par la mise en rotation de ses parties de rotor. En revanche, dans le cas d'un actionneur linéaire, considéré comme la limite asymptotique d'un actionneur rotatif, les aimants permanents d'extrémité doivent inévitablement résister à une force résultante et à un couple résultant selon la direction axiale du (des) actionneur(s). Comme cela ressort des figures 4A et 4B, on constate que les parties de rotor adjacentes l'une avec l'autre et qui se déplacent (tournent) dans le même sens sont, en pratique, sans mouvement relatif l'un par rapport à l'autre. On peut donc envisager de les lier mécaniquement, voire même de les fabriquer en une seule et même pièce. On précise que dans la variante de la figure 4B les parties de rotors adjacentes aux parties de stator, c'est-à-dire les plus proches des aimants permanents, peuvent être, dans un mode de réalisation non préférentiel, fixées solidairement à celles-ci. On bénéficie ainsi d'une répulsion électromagnétique (un palier) qui, en repoussant la partie de rotor la plus proche et libre de mouvement, permet de diminuer les frottements, mais au prix de pertes par effet Joule dans les parties de rotor ainsi sacrifiées, en ce sens qu'elles ne contribuent pas à la fourniture du couple moteur de l'actionneur. Sur la figure 4B, on a schématisé un cadre foncé C qui symbolise la fixation mutuelle entre une partie de stator 100 ou 210 et la partie de rotor adjacente, cette partie de rotor joue alors le rôle de palier magnétique, les flèches indiquant leur déplacement devenant sans objet. Dans le mode de réalisation préféré selon l'invention, ce cadre peut être ignoré, et les flèches retrouvent leur signification habituelle.

En **figure 5,** on a représenté une variante avantageuse de réalisation d'une partie de rotor qui permet d'obtenir une grande valeur pour le couple moteur, tout en minimisant l'inductance parasite. La partie de rotor représentée $30_i$ réalisée est ainsi constitué par un circuit imprimé multicouches avec un nombre de quatre couches en matériau conducteur électrique superposées l'une sur l'autre pour former une seule portion de piste. Ainsi, la portion de piste 300 dans laquelle circule un courant entrant dans le plan XY est constituée par les quatre couches 300.1, 300.2, 300.3, 300.4 empilées l'une sur l'autre. De même, la portion de couche adjacente 301 dans laquelle circule un courant en sens opposé est constituée de quatre couches 301.1, 301.2, 301.3, 301.4 empilées les unes sur les autres. Un nombre pair de couches conductrices empilées les unes sur les autres pour constituer une même portion de piste 300 ou 301 est avantageux. En effet, avec un nombre pair de couches le chemin de retour d'une couche donnée est alors effectué dans une autre couche empilée du circuit imprimé. L'inductance propre résultante des pistes en matériau conducteur ainsi réalisées peut être la plus faible possible. Autrement dit, on cherche à réduire au minimum l'inductance propre des matériaux conducteurs de courant au sein d'une même partie de rotor. Le substrat de la partie de rotor $30_i$ est de préférence une plaque en pré-imprégné, tel que de la résine époxyde, les couches en matériau conducteur électrique sont en cuivre et sont recouvertes d'une couche de finition 302 en matériau isolant électrique. On obtient ainsi une partie de rotor dont la masse et l'inertie sont minimisées. En pratique, on peut réaliser des portions 300, 301 de piste conductrice 4 à profil relativement large et fin pour réduire l'effet de peau aussi appelé effet Kelvin selon lequel, à une certaine fréquence élevée, le courant a tendance à ne circuler qu'en surface des conducteurs. Avec un tel profil large et fin, on augmente également l'adhérence mécanique entre substrat 30 et les pistes conductrices 4 et donc augmente le couplage mécanique entre eux pour la transmission des efforts. A titre d'exemple, une piste conductrice 4 peut avoir une largeur l de l'ordre de 12 à 15mm pour une épaisseur e de l'ordre de 70 μm. A titre d'exemple, la couche de protection 302 peut avoir une épaisseur de l'ordre de 70μm.

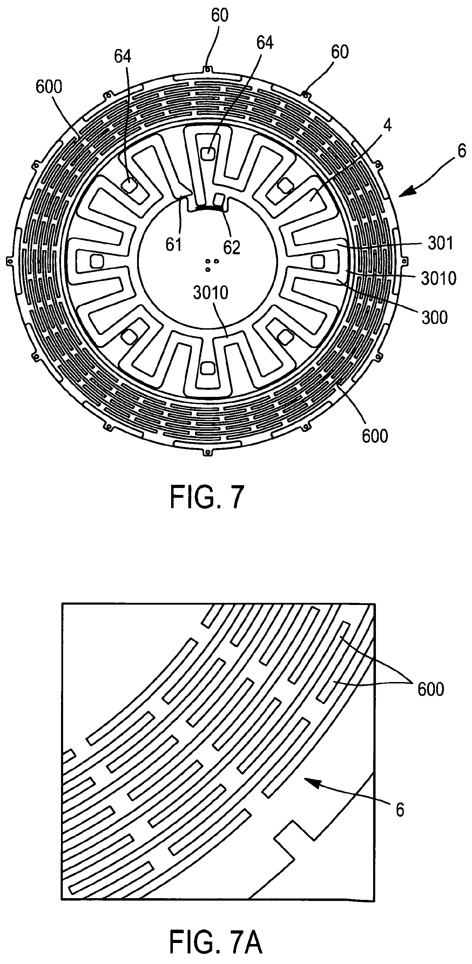

En **figures 6A et 6B,** on a représenté une partie de rotor 30i conformée sous une forme générale de disque 6, plus exactement sous la forme d'un anneau. Le disque de rotor $30_i$, 6 comprend une seule piste 4 de matériau conducteur électrique réalisée dans un substrat isolant. Ce mode illustré est particulièrement avantageux car toutes les portions radiales 300, 301 de piste sont reliées entre elles par des portions tangentielles 3010 en formant des créneaux. Cela permet une interconnexion simple entre toutes les portions radiales 300, 301 qui sont celles en regard des aimants permanents des parties de stator. Autrement dit, les portions radiales 300, 301 qui engendrent les forces motrices de Laplace que l'on recherche dans les actionneurs selon l'invention sont interconnectées ensemble ici de manière optimale pour contribuer au couple total. Dans l'exemple illustré, les portions radiales 300, 301 sont réalisées avec un écartement angulaire de 15° entre deux adjacentes. Deux languettes de connexion d'entrée 61 et de sortie 62 destinées à réaliser respectivement l'entrée et la sortie du courant I dans la piste 4 sont prévues côte à côte à l'intérieur de l'anneau 6 à des fins de simplicité de connexion électrique par des fils souples. En effet, comme mentionné ci-dessus, le débattement angulaire ou déplacement linéaire des parties de rotor étant très faibles, on peut réaliser les connexions électriques uniquement avec fils souples. En outre du fait du poids moindre de fils souples de connexion électrique, ils n'augmentent pas l'inertie des parties de rotor. Le disque 6 comprend à sa périphérie une pluralité de trous 60 destinés chacun à la fixation d'une bride de connexion mécanique ou autrement dit de transmission de mouvement comme expliqué ci-après. Un disque 6 comprend également une piste conductrice 63 à sa périphérie intérieure qui constitue un écran apte à protéger une électronique de commande des champs électriques susceptibles d'induire des courants capacitifs. Pour réaliser l'alimentation électrique, on peut avoir autant de générateurs de courant impulsionnel commandé que de disques de rotor. Avantageusement, pour simplifier et pour des raisons de coût, on peut réduire ce nombre, et on peut réaliser la mise en série de toutes les parties de rotor et donc avoir un seul générateur de courant impulsionnel commandé pour un actionneur donné ou pour un ensemble de deux actionneurs A1, A2 comme détaillé par la suite. Avantageusement également, pour réaliser l'alimentation électrique, on peut mettre en série toutes les parties de rotor d'un même actionneur. De préférence, et en pratique, on réalise cela par l'intermédiaire de fils de connexion souples au niveau des languettes de connexion d'entrée 61 et de sortie 62. Avec de tels fils souples, la mise en série électrique est assurée simplement et en outre sans rajouter de masse superflue qui pourrait pénaliser l'inertie des parties de rotor. Comme illustré sur les **figures 7A et 7B,** le disque de rotor 6 est percé de trous traversant 64. A travers chacun de ces trous 64 est prévu d'être logé une entretoise non représentée. Cette entretoise est réalisée en matériau amagnétique pour ne pas perturber le flux magnétique dans la partie active des entrefers. La fonction des entretoises est de garantir l'épaisseur de l'entrefer pour éviter les pincements des parties de rotor entre les parties de stator. On précise ici qu'on prévoit un jeu de fonctionnement entre une entretoise et les trous 64 dans laquelle elle est logée. En effet, ce jeu de fonctionnement doit être suffisant pour permettre le débattement angulaire prédéterminé pour chaque disque de rotor 6.

Les figures 7A et 7B illustrent une variante de réalisation d'un disque de rotor 6 selon l'invention. Dans cette variante, la partie périphérique du disque 6 qui ne comprend pas de pistes conductrices et est donc uniquement en matériau isolant électrique, est percé de lumières 600 décalées régulièrement sur un diamètre donné et décalées également d'un diamètre donné à l'autre tel que mieux illustré en figure 7A. On augmente ainsi le chemin des courants de fuite susceptibles d'apparaître à la surface de l'isolant électrique 30 du support des parties de rotor. Autrement dit, on augmente la longueur des lignes de fuite sur la partie de rotor. Autrement dit, on cherche à faire entre ces lumières 600 des chicanes diélectriques.

La **figure 8** illustre la fixation avantageuse d'une pluralité de brides de connexion mécanique 7 qui fixent chacune entre elles quatre parties de rotor identiques $30_1$, $30_2$ ; $30_3$ et $30_4$, qui appartiennent à deux actionneurs A1, A2 superposés l'un sur l'autre et tournent dans un même sens de rotation Y lorsque soumis à un courant électrique. Chaque partie de rotor $30_1$, $30_2$ ; $30_3$, $30_4$ est réalisée sous la forme d'un disque annulaire 6 comme montré en figures 7A et 7B. Ainsi, une bride de connexion mécanique 7, constituée par un portion tubulaire évidée, est vissée au travers des trous 60 d'une part aux deux parties de rotor $30_1$, $30_2$ de l'actionneur A1 du dessus par l'intermédiaire d'un système de vis/écrou 71 et d'autre part aux deux parties de rotor $30_3$, $30_4$ de l'actionneur A2 du dessous par l'intermédiaire d'un système de vis/écrou 72. Les systèmes de vis/écrou 71 ou 72 peuvent bien entendu être remplacés par tout système mécanique équivalent. La fixation est réalisée sur toute la périphérie des disques de rotor $30_1$, $30_2$ ; $30_3$, $30_4$ qui tournent dans un sens et de ceux $31_1$, $31_2$ ; $31_3$ et $31_4$ qui tournent dans le sens opposé de telle manière que deux brides rigides 70 adjacentes l'une à l'autre sont reliées à des disques de rotor adaptés pour se déplacer dans un sens opposé l'un par rapport à l'autre. Au-delà de leur fonction de transmission mécanique du mouvement de rotation des disques de rotor comme expliqué ci-après, les brides de connexion 70 ainsi proposées permettent de créer une structure rigide autoportée en quelque sorte. Comparativement aux actionneurs rotatifs selon l'état de l'art, cela est particulièrement avantageux puisqu'ici on s'affranchit de nombreuses pièces, notamment l'arbre supportant la partie rotor proprement dite, les paliers supportant l'arbre.

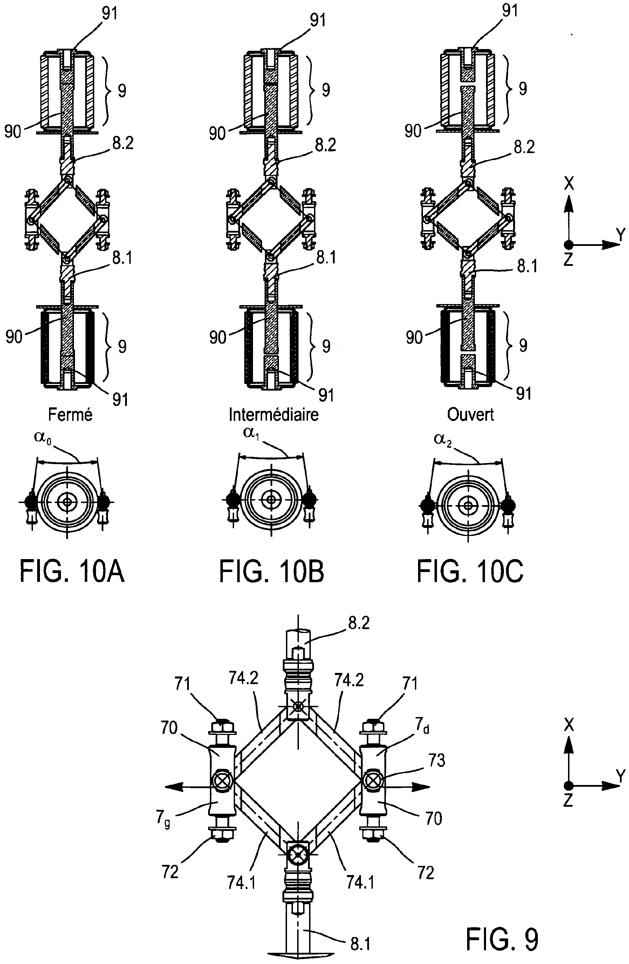

En **figure 9,** on a représenté les moyens de transmission mécanique entre le mouvement de rotation des disques de rotor des actionneurs et élément mécanique à déplacer en translation. Ici, chacune de deux brides adjacentes 7d, 7g qui se déplacent en translation en sens opposé selon la direction Y, du fait des rotations en sens opposé des disques de rotor qu'elle fixe, est articulée à deux bielles de déplacement 74.1 et 74.2 par l'intermédiaire d'un axe 73 dans sa partie évidée du tube. Chacune des deux bielles de déplacement 74.1 et 74.2 est articulée à un même élément mécanique 8.1 ou 8.2 respectivement. Ainsi, lorsque les disques de rotor sont en rotation dans un sens opposé, les deux brides adjacentes 7g, 7d se déplacent simultanément en translation en sens opposé l'une de l'autre selon la direction Y et génèrent donc un déplacement simultané en translation selon la direction X de chaque élément mécanique 8.1 ou 8.2. Autrement dit, avec la connexion mécanique représentée en figure 9, on définit un parallélogramme déformable qui permet une répartition des efforts de transmission mécanique optimale entre les disques de rotor et les éléments mécaniques à déplacer.

En **figures 10A à 10C,** on a finalement représenté l'application préférée dans laquelle l'élément mécanique 8.1 ; 8.2 qui vient d'être décrit est solidaire d'un contact mobile 90 d'une ampoule à vide 9 dont l'autre contact 91 est fixe. Comme cela ressort de ces figures, un débattement angulaire très faible ($\alpha_2$- $\alpha_0$) des parties de rotor des actionneurs selon l'invention non représentées permet de passer de la position fermée (figure 10A) à la position extrême d'ouverture (figure 10C) des deux ampoules à vide 9 par l'intermédiaire des brides de connexion mécanique 70 et des bielles de déplacement 74.1, 74.2. Ces ampoules à vide 9 constituent une partie d'un appareillage électrique, destiné à réaliser, interrompre ou couper un courant élevé sous haute tension. Dans leur application principale de sectionnement dans un disjoncteur mécatronique tel que décrit et revendiqué dans la demande de brevet déposée le même jour que la présente demande et intitulée « *Dispositif disjoncteur mécatronique et procédé de déclenchement associé et application à la coupure de courant continu élevé* », les ampoules à vide ne doivent pas elles-mêmes couper ce courant.

L'application principale visée pour ces ampoules à vides est de constituer un ensemble électromécanique d'interruption-sectionnement dans un dispositif disjoncteur mécatronique destiné à couper en des temps très courts des courants continus ou alternatifs sous haute tension.

L'actionneur électromagnétique à aimants permanents et l'interrupteur-sectionneur mécanique qu'il actionne selon l'invention trouvent alors tout leur sens lorsqu'ils sont réalisés selon le mode préféré suivant consistant à leur conférer une double modularité.

Une première modularité concerne la capacité à conduire, pour une position dite fermée de l'interrupteur-sectionneur, des courants permanents de grande intensité, par exemple de 3000A, avec un niveau de pertes d'insertion réduit, et à isoler entre elles, pour une position dite ouverte de ce même interrupteur-sectionneur, des portions de circuit primaire sous haute tension. Cette double fonctionnalité se traduit, dans le cas d'appareillages électriques conventionnels, par des pièces mobiles massives, de plusieurs kg, en raison des importantes surfaces de contact et pressions d'appui requises pour assurer une faible résistance de contact, et des distances importantes, sur des distances de plusieurs cm, de séparation entre contacts en position ouverte, en vue de tenir les tensions. Aussi, la première modularité selon l'invention consiste à diviser le conducteur primaire en une pluralité de sous-branches, chaque sous branche ayant les mêmes fonctions qu'une branche unique, mais avec des contraintes allégées. Ainsi, selon un mode de réalisation préféré de cette première modularité selon l'invention, le conducteur primaire est divisé en douze sous branches se répartissant le courant en position fermée de l'interrupteur-sectionneur. Dans le cas où, selon ce mode préféré de l'invention, l'interrupteur-sectionneur est divisé en douze paires d'ampoules à vide telles que décrites en figure 10, chaque ampoule à vide ne doit conduire, en position fermée, qu'une valeur égale à un douzième (1/12$^{ème}$) de la valeur du courant total, en supposant que celui-ci est distribué de façon homogène à chaque paire d'ampoules. Avec l'exemple précité d'un courant primaire total de 3000A, chaque paire d'ampoules en série ne doit transiter que 250A. On conçoit alors que les dimensions des contacts et les pressions statiques en position fermée soient considérablement plus faibles que dans le cas d'une ampoule unique de même performance. Or, l'actionneur électromagnétique selon l'invention est réalisé à partir de parties de rotors en circuit imprimé comme montré aux figures 6 et 7, et agencés sous la forme de rotors à rotation contrarotative comme montré aux figures 3 et 8. Il est donc tout à fait adapté à la mise en action d'une pluralité de modules de paires d'ampoules à vide telles qu'illustrés en figure 8 et uniformément distribuées autour des rotors de l'actionneur selon l'invention. Lorsque les modules d'ampoule à vide sont convenablement fixés à un référentiel solidaire des stators de l'actionneur, les parties de rotors sont alors automatiquement positionnées de par leur couplage aux modules d'ampoules à vide. Le risque d'hyperstatisme, au sens mécanique du terme, est évité de par les jeux appropriés, en particulier par les jeux prévus dans les trous de passage des entretoises de positionnement des parties de stator.

Une deuxième modularité concerne la capacité à tenir des tensions élevées en position ouverte. Dans le cas d'appareillages électriques conventionnels, cette fonctionnalité entraîne la nécessité de déplacer des pièces de contact massives, de plusieurs kg, sur des distances de plusieurs cm, et en des temps très courts et à des vitesses spécifiées relativement élevées, ce qui nécessite des énergies de commande importantes. Il est alors connu dans le domaine de la haute tension, une technique dite de double mouvement qui consiste à déplacer simultanément les deux contacts en regard d'un même appareillage à une vitesse sensiblement égale à la moitié de la vitesse différentielle requise. Cela a pour conséquence, au premier ordre, de diminuer de moitié l'énergie mécanique nécessaire à la manoeuvre. La deuxième modularité de l'actionneur électromagnétique à aimants permanents et l'interrupteur-sectionneur mécanique selon l'invention consiste donc en une généralisation de l'objectif visé par la technique du double mouvement, à savoir minimiser l'énergie de manoeuvre. En effet, la deuxième modularité selon l'invention consiste en une conception modulaire de l'interrupteur-sectionneur mécanique qui autorise la mise en série d'une pluralité d'interrupteurs-sectionneurs mécaniques identiques. Cette mise en oeuvre suppose la capacité à fournir l'énergie de manoeuvre à des objets placés sous tension, sans référence au sol. Or, les avantages des deux modularités mentionnées qui viennent en complément de la solution d'actionneur différentiel selon l'invention, et compte tenu du mode d'utilisation de tels appareillages dans lequel ils ne sont sollicités que de façon sporadique, conduisent à définir un dispositif dont l'énergie nécessaire à une manoeuvre d'ouverture et/ou de fermeture peut être stockée dans un banc de capacités embarquées, la puissance moyenne nécessaire à la restauration de l'énergie après une manoeuvre étant suffisamment faible, compte tenu du taux de sollicitation (utilisation), pour que cette énergie puisse être transmise par optoalimentation depuis une source lumineuse située au sol, tel un ou plusieurs lasers à semi-conducteurs ou une ou plusieurs diodes électroluminescentes de grande puissance, et acheminée au coeur de l'actionneur selon l'invention via une ou plusieurs fibres optiques de préférence en silice, la conversion de 1 énergie lumineuse en énergie électrique étant effectuée de façon connue via un ou plusieurs convertisseurs photovoltaïques.

Les deux modularités qui viennent d'être décrites auxquelles on peut associer l'optoalimentation de l'énergie requise pour une manoeuvre d'ouverture et/ou de fermeture permettent à un actionneur électromagnétique a aimants permanents et l'interrupteur-sectionneur mécanique selon l'invention d'être utilisés dans le disjoncteur mécatronique tel que décrit et revendiqué dans la demande de brevet déposée le même jour que la présente demande et intitulée « *Dispositif disjoncteur mécatronique et procédé de déclenchement associé et application à la coupure de courant continu élevé* ».

De nombreuses améliorations peuvent être prévues sans pour autant sortir du cadre de l'invention.

Ainsi, en ce qui concerne les matériaux, tous les aimants permanents selon l'invention peuvent être en terre rare, tels qu'en Néodyme Fer Bore. Ils peuvent également être en matière organique.

En ce qui concerne la fixation des aimants permanents sur leurs substrats, on peut simplement envisager comme illustré un collage directement sur les substrats et le cas échéant une insertion dans des rainures dans les substrats, ces rainures permettant essentiellement de faciliter le positionnement des aimants lors de l'assemblage de la partie de stator sur laquelle ils sont montés. On veille bien entendu dans le mode de fixation à modifier le moins possible les lignes de champs magnétiques.

En outre, en ce qui concerne la forme des aimants permanents on peut envisager des aimants de forme générale parallélépipédique. Pour un actionneur rotatif selon l'invention, on peut également envisager des aimants permanents de forme trapézoïdale selon leur longueur, c'est-à-dire en vue de face des parties de stator. Ainsi, on peut ainsi avoir des portions conductrices actives des parties de rotor, i.e. celles parcourues par le courant permettant l'établissement des forces motrices de Laplace, qui restent tout au long du débattement angulaire en regard des aimants permanents. Autrement dit, tout au long de leur débattement angulaire, les portions conductrices actives (portions qui s'étendent radialement) peuvent rester au maximum dans les zones de champs d'induction magnétiques les plus actives. On peut également envisager des aimants de section trapézoïdale, c'est-à-dire selon leur épaisseur, ou autrement dit dans le sens de l'épaisseur des entrefers à réaliser. On peut ainsi augmenter localement la densité de flux magnétique à leur niveau.

Par ailleurs, en ce qui concerne les connexions mécaniques pour transmettre les efforts mécaniques entre parties de rotor et éléments mécaniques à déplacer, elles peuvent avantageusement consister en des parallélogrammes déformables comme représenté en figure 9. D'ailleurs, les bielles 74.1 ou 74.2 peuvent être rigides ou déformables. Lorsqu'elles sont rigides elles peuvent être réalisées en matière plastique de préférence injectée. La section des bielles peut être adaptée à souhait : ainsi, ces bielles peuvent être plates, cylindriques ou asymétriques.

## Revendications

1. Actionneur électromagnétique (A) du type à aimants permanents comprenant :

- une première partie de stator (1) formée dans un premier substrat (10), dont au moins une partie présente une symétrie de révolution avec au moins une face plane formant un disque définissant un axe de symétrie orthogonal au disque, et comprenant une première série d'aimants permanents (100, 110) apparents sur au moins le disque du premier substrat en étant uniformément distribués à sa surface selon un pas angulaire constant ; chacun des aimants permanents présentant une forme avec au moins un plan de symétrie orthogonal à ses pôles Nord et Sud plans et parallèles entre eux, et parallèles au disque ; les surfaces de contact des aimants permanents avec le disque étant inscrites entre deux cercles concentriques entre eux et concentriques au disque ; le plan de symétrie de chaque aimant étant orienté selon un rayon de ces cercles concentriques ; deux aimants permanents de la première série adjacents l'un de l'autre ayant un sens d'orientation magnétique inversé (100, 110) ;

- une deuxième partie de stator (2) formée dans un deuxième substrat (20) dont au moins une partie présente une symétrie de révolution avec au moins une face plane formant un disque définissant un axe de symétrie orthogonal au disque, et comprenant une deuxième série d'aimants permanents (200, 210) apparents sur au moins le disque du deuxième substrat en étant uniformément distribués à sa surface selon un pas angulaire constant ; chacun des aimants permanents présentant une forme avec au moins un plan de symétrie orthogonal à ses pôles Nord et Sud plans et parallèles entre eux, et parallèles au disque ; les surfaces de contact des aimants permanents avec le disque étant inscrites entre deux cercles concentriques entre eux et concentriques au disque ; le plan de symétrie de chaque aimant étant orienté selon un rayon de ces cercles concentriques ; deux aimants permanents de la deuxième série adjacents l'un de l'autre ayant un sens d'orientation magnétique inversé (210, 200) ; la deuxième partie de stator étant agencée parallèlement à la première partie de stator de façon à ce que les axes de symétrie de leurs disques soient confondus et de façon telle qu'un pôle (S ou N) d'un aimant de la deuxième série (210, 200) soit en regard d'un pôle inversé d'un aimant de la première série (100, 110);

- au moins une paire ($3_i$) de parties de rotor ($30_i$, $31_i$) superposées l'une sur l'autre dans les entrefers entre la première et deuxième parties de stator, chaque partie de rotor ($30_i$, $31_i$) étant formée à partir d'un substrat en matériau isolant électrique et comprenant au moins une piste (4) d'au moins une couche en matériau conducteur électrique (300.1, 300.2, 300.3, 300.4; 301.1, 301.2, 301.3, 301.4) disposée selon un plan parallèle au plan du substrat, la piste comprenant des portions de piste radiales (300, 301 ; 311, 310) dites portions de piste motrices, de largeur unitaire inférieure ou égale à celle des aimants permanents selon la direction radiale aux entrefers et perpendiculaire à la direction de l'épaisseur des entrefers entre première et deuxième parties de stator, les portions de piste motrices étant espacées parallèlement les unes des autres selon le même pas angulaire que pour la première et deuxième série d'aimants permanents, le nombre de portions de piste motrices étant égal au nombre d'aimants des première et deuxième parties de stator ;

actionneur dans lequel :

- deux portions de piste (300, 301 ; 311, 310) motrices situées dans un même plan et adjacentes l'une à l'autre dans une même partie de rotor ($30_i$ ou $31_i$) sont adaptées pour être alimentées par un courant circulant en sens inverse dans l'une par rapport à l'autre ;
- deux portions de piste (300, 311 ; 301, 310) motrices appartenant respectivement à la première et à la deuxième partie de rotor d'une même paire ($3_i$) de partie de rotors et superposées l'une sur l'autre de façon à être soumises au champ d'induction magnétique créé par une même paire d'aimants, sont également adaptées pour être simultanément alimentées par un courant circulant en sens inverse l'une par rapport à l'autre.

2. Actionneur à aimants permanents selon la revendication 1, dans lequel les aimants permanents sont collés directement sur les substrats les supportant.

3. Actionneur à aimants permanents selon la revendication 2, dans lequel les aimants permanents sont en outre insérés dans des rainures (1000, 2000) pratiquées dans les substrats des parties de stator.

4. Actionneur à aimants permanents selon l'une des revendications précédentes, dans lequel entre deux aimants adjacents (100, 110 ou 210, 200) d'une même partie de stator, est intercalé un bouclier (120, 220) en matériau non-ferromagnétique dont l'épaisseur est suffisante pour empêcher tout contact mécanique entre les surfaces exposées des aimants et les parties de rotor qui leur sont les plus proches.

5. Actionneur à aimants permanents selon la revendication 4, dans lequel les boucliers (120, 220) font partie d'une seule pièce mécanique fixée sur la partie de stator (10, 20) avec laquelle elle est en contact.

6. Actionneur à aimants permanents selon la revendication 4 ou 5, dans lequel les boucliers (120, 220) sont en matériau isolant électrique.

7. Actionneur à aimants permanents selon l'une des revendications 4 à 6, dans lequel les boucliers sont réalisés à partir d'un fluoropolymère tel que le polytétrafluoroéthène (PTFE).

8. Actionneur à aimants permanents selon l'une des revendications précédentes, dans lequel chaque partie de rotor ($30_i$, $31_i$ ; $30_1$, $31_1$ ; $30_2$, $31_2$ ; $30_3$, $31_3$ ;

$30_4$, $31_4$) comprend une seule piste (4), les portions radiales (300, 301) de piste motrices étant reliées entre elles par des portions tangentielles (3010) en formant des créneaux en vue de face de la partie de rotor.

9. Actionneur à aimants permanents selon l'une des revendications précédentes, dans lequel une partie de rotor est réalisée par un circuit imprimé multicouches, une piste (4) étant constituée par un nombre pair de couches en matériau conducteur électrique (300.1, 300.2, 300.3, 300.4 ou 301.1, 301.2, 301.3, 301.4) empilées les unes sur les autres adaptées pour être alimentées par un courant circulant dans le même sens.

10. Actionneur à aimants permanents selon la revendication 9, dans lequel le nombre de couches en matériau conducteur électrique empilées est égal à quatre.

11. Actionneur à aimants permanents selon l'une des revendications précédentes, dans lequel le substrat d'une partie de rotor ($30_i$) est une plaque en pré-imprégné, la (les) couches en matériau conducteur électrique (300.1, 300.2, 300.3, 300.4 ou 301.1, 301.2, 301.3, 301.4) est (sont) en cuivre et est (sont) recouverte d'une couche de finition (302) en matériau isolant électrique.

12. Actionneur à aimants permanents selon comprenant au moins deux paires distinctes ($3_1$, $3_2$ ; $3_3$, $3_4$) de deux parties de rotor ($30_i$, $31_1$ ; $30_2$, $31_2$ ; $30_3$, $31_3$ ; $30_4$, $31_4$) superposées l'une sur l'autre dans les entrefers entre la première (10) et deuxième (20) partie de stator.

13. Actionneur à aimants permanents selon la revendication 12, dans lequel deux parties de rotor superposées l'une sur l'autre et appartenant à deux paires distinctes sont adaptées pour se déplacer dans un même sens lorsque toutes les pistes sont alimentées par un courant.

14. Actionneur à aimants permanents selon la revendication 12, dans lequel deux parties de rotor superposées l'une sur l'autre et appartenant à deux paires distinctes sont adaptées pour se déplacer dans un sens opposé l'une par rapport à l'autre lorsque toutes les pistes sont alimentées par un courant.

15. Actionneur à aimants permanents selon l'une des revendications précédentes, dans lequel toutes les pistes des parties de rotor sont alimentées en série électrique par le même courant.

16. Actionneur à aimants permanents selon la revendication 15, dans lequel la connexion électrique entre parties de rotor se fait par des fils conducteurs flexibles.

17. Actionneur à aimants permanents selon l'une des revendications précédentes, dans lequel les substrats supportant les aimants permanents sont en matériau ferromagnétique.

18. Actionneur à aimants permanents selon l'une des revendications précédentes, dans lequel le nombre d'aimants permanents dans une série de chaque partie de stator est pair.

19. Ensemble d'actionneurs comprenant au moins deux actionneurs (A1, A2) à aimants permanents selon l'une des revendications 1 à 18 et superposés l'un sur l'autre, dans lequel la deuxième partie de stator de l'un des deux actionneurs constitue également la première partie de stator de l'autre des deux actionneurs, dite partie de stator intermédiaire, ladite partie de stator intermédiaire (12) comprenant une même série d'aimants permanents avec chaque pôle apparent sur une face d'un même substrat.

20. Ensemble d'actionneurs (A1, A2) selon la revendication 19, dans lequel toutes les pistes des parties de rotor sont alimentées en série électrique par le même courant I.

21. Ensemble d'actionneurs (A1, A2) selon la revendication 19 ou 20, dans lequel dans lequel la connexion électrique entre parties de rotor se fait par des fils conducteurs flexibles (5).

22. Ensemble d'actionneurs (A1, A2) selon l'une des revendications 19 à 21, dans lequel les parties de rotor $(30_1, 30_2, 30_3, 30_4 ; 31_1, 31_2, 31_3, 31_4)$ des deux actionneurs sont adaptées pour se déplacer dans le même sens de rotation sont reliées mécaniquement à leur périphérie par des brides rigides (7) chacune constituant une bride de connexion.

23. Ensemble d'actionneurs (A1, A2) selon revendication 22, dans lequel deux brides rigides (7d ; 7g) adjacentes l'une à l'autre sont reliées à des disques de rotor adaptés pour se déplacer dans un sens de rotation opposé l'un par rapport à l'autre, chacune des deux brides étant reliée mécaniquement à au moins une bielle de déplacement (74.1 ; 74.2), chacune des deux bielles de déplacement étant reliée mécaniquement à un même élément mécanique (8.1 ; 8.2), de sorte que le déplacement en rotation des disques de rotor dans un sens opposé génère un déplacement en translation de l'élément mécanique (8.1 ; 8.2).

24. Ensemble d'actionneurs (A1, A2) selon revendication 23, dans lequel chacune des deux brides adjacentes (7d ; 7g) est reliée mécaniquement à deux bielles de déplacement (74.1 ; 74.2) elles-mêmes reliées mécaniquement chacune à un élément mécanique distinct (8.1 ; 8.2) de sorte que le déplacement en rotation des disques de rotor dans un sens radial opposé génère un déplacement en translation des deux éléments mécaniques distincts dans un sens de translation opposé l'un par rapport à l'autre.

25. Appareillage électrique, destiné à réaliser l'interruption-sectionnement d'un courant électrique comprenant au moins un ensemble d'actionneurs selon l'une des revendications 23 ou 24, dans lequel un élément mécanique (8.1 ; 8.2) est solidaire d'un contact mobile (90) d'une ampoule à vide (9).

26. Utilisation d'un appareillage électrique selon la revendication 25 en tant que partie d'un dispositif disjoncteur mécatronique destiné à couper des courants continus sous haute tension.

**Patentansprüche**

1. Elektromagnetischer Aktuator (A) vom Typ mit Permanentmagneten, enthaltend:

- ein erstes Statorteil (1), das aus einem ersten Substrat (10) ausgebildet ist, wovon zumindest ein Teil eine Rotationssymmetrie mit zumindest einer eine Scheibe bildenden, ebenen Fläche aufweist, die eine orthogonal zur Scheibe verlaufende Symmetrieachse definiert, und das eine erste Reihe von Permanentmagneten (100, 110) enthält, die zumindest an der Scheibe des ersten Substrats vorliegen und dabei gleichmäßig über ihre Fläche mit konstantem Teilungswinkel verteilt sind; wobei jeder der Permanentmagnete eine Form mit zumindest einer Symmetrieebene aufweist, die sich orthogonal zu seinen flachen, parallel zueinander und parallel zur Scheibe verlaufenden Nordpol und Südpol erstreckt; wobei die Kontaktflächen der Permanentmagnete mit der Scheibe zwischen zwei konzentrisch zueinander und konzentrisch zur Scheibe verlaufenden Kreisen eingeschrieben sind; wobei die Symmetrieebene eines jeden Magneten entlang eines Radius dieser konzentrischen Kreise ausgerichtet ist; wobei zwei aneinandergrenzende Permanentmagnete der ersten Reihe eine umgekehrte magnetische Ausrichtung (100, 110) haben;
- ein zweites Statorteil (2), das aus einem zweiten Substrat (20) ausgebildet ist, wovon zumindest ein Teil eine Rotationssymmetrie mit zumindest einer eine Scheibe bildenden, ebenen Fläche aufweist, die eine orthogonal zur Scheibe verlaufende Symmetrieachse definiert, und das eine zweite Reihe von Permanentmagneten (200, 210) enthält, die zumindest an der Scheibe des zweiten Substrats vorliegen und dabei gleichmäßig über ihre Fläche mit konstantem Teilungswinkel verteilt sind; wobei jeder der Permanentmagnete eine Form mit zumindest einer Symmetrieebene aufweist, die sich orthogonal zu seinen flachen, parallel zueinander und parallel zur Scheibe verlaufenden Nordpol und Südpol erstreckt, wobei die Kontaktflächen der Permanentmagnete mit der Scheibe zwischen zwei konzentrisch zueinander und konzentrisch zur Scheibe verlaufenden Kreisen eingeschrieben sind; wobei die Symmetrieebene eines jeden Magneten entlang eines Radius dieser konzentrischen Kreise ausgerichtet ist; wobei zwei aneinandergrenzende Permanentmagnete der zweiten Reihe eine umgekehrte magnetische Ausrichtung (200, 210) haben; wobei der zweite Statorteil parallel zum ersten Statorteil angeordnet ist, so dass die Symmetrieachsen ihrer Scheiben zusammenfallen und so dass ein Pol (S oder N) eines Magneten der zweiten Reihe (210, 200) gegenüber einem umgekehrten Pol eines Magneten der ersten Reihe (100, 110) liegt;

- zumindest ein Paar $(3_i)$ von Rotorteilen $(30_i, 31_i)$, die in Luftspalten zwischen dem ersten und dem zweiten Statorteil übereinander geordnet sind, wobei jeder Rotorteil $(30_i, 31_i)$ ausgehend von einem Substrat aus elektrisch isolierendem Material gebildet ist und zumindest eine Bahn (4) aus zumindest einer Schicht aus elektrisch leitendem Material (300.1, 300.2, 300.3, 300.4; 301.1, 301.2, 301.3, 301.4) aufweist, die in einer Ebene parallel zur Ebene des Substrats angeordnet ist, wobei die Bahn radial verlaufende Bahnabschnitte (300, 301; 311, 310) aufweist, motorische Bahnabschnitte genannt, deren einheitliche Breite geringer oder gleich der der Permanentmagnete in zu den Luftspalten radial und zur Richtung der Dicke der Luftspalten zwischen dem ersten und dem zweiten Statorteil senkrecht verlaufender Richtung ist, wobei die motorischen Bahnabschnitte mit der gleichen Winkelteilung wie bei der ersten und der zweiten Reihe von Permanentmagneten parallel zueinander beabstandet sind, wobei die Anzahl an motorischen Bahnabschnitten gleich der Anzahl an Magneten des ersten und des zweiten Statorteils ist;

- bei welchem Aktuator:

- zwei motorische Bahnabschnitte (300, 301; 311, 310), die in einer gleichen Ebene liegen und in einem gleichen Rotorteil $(30_i$ bzw. $31_i)$ aneinander angrenzen, dazu ausgelegt sind, mit einem Strom versorgt zu werden, der in jeweils umgekehrten Richtungen fließt;

- zwei motorische Bahnabschnitte (300, 311; 301, 310), die zu dem ersten bzw. zu dem zweiten Rotorteil eines gleichen Paares $(3_i)$ von Rotorteilen gehören und übereinander geordnet sind, so dass sie dem magnetischen Induktionsfeld unterworfen sind, das von einem gleichen Magnetpaar erzeugt wird, auch dazu ausgelegt sind, gleichzeitig mit einem Strom versorgt zu werden, der jeweils in umgekehrten Richtungen fließt.

**2.** Aktuator mit Permanentmagneten nach Anspruch 1, wobei die Permanentmagnete unmittelbar an den diese tragenden Substraten anhaften.

**3.** Aktuator mit Permanentmagneten nach Anspruch 2, wobei die Permanentmagnete ferner in Nuten (1000, 2000) eingesetzt sind, die in den Substraten der Statorteile ausgeführt sind.

**4.** Aktuator mit Permanentmagneten nach einem der vorangehenden Ansprüche, wobei zwischen zwei aneinandergrenzenden Magneten (100, 110 bzw. 210, 200) eines gleichen Statorteils ein Schild (120, 220) aus nichtferromagnetischem Material eingefügt ist, dessen Dicke ausreicht, um jeglichen mechanischen Kontakt zwischen den freiliegenden Flächen der Magnete und den Rotorteilen zu verhindern, die diesen am nächsten liegen.

**5.** Aktuator mit Permanentmagneten nach Anspruch 4, wobei die Schilde (120, 220) zu einem einzigen mechanischen Stück gehören, das an dem Statorteil (10, 20) befestigt ist, mit dem es in Kontakt steht.

**6.** Aktuator mit Permanentmagneten nach Anspruch 4 oder 5, wobei die Schilde (120, 220) aus elektrisch isolierendem Material bestehen.

**7.** Aktuator mit Permanentmagneten nach einem der Ansprüche 4 bis 6, wobei die Schilde aus einem Fluorpolymer, wie etwa Polytetrafluorethen (PTFE), hergestellt sind.

**8.** Aktuator mit Permanentmagneten nach einem der vorangehenden Ansprüche, wobei jeder Rotorteil $(30_i, 31_i; 30_1, 31_1; 30_2, 31_2; 30_3, 31_3; 30_4, 31_4)$ eine einzige Bahn (4) aufweist, wobei die radial verlaufenden, motorischen Bahnabschnitte (300, 301) über tangentiale Abschnitte (3010) miteinander verbunden sind, indem sie in Vorderansicht auf den Rotorteil Zinnen bilden.

**9.** Aktuator mit Permanentmagneten nach einem der vorangehenden Ansprüche, wobei ein Rotorteil aus einer mehrschichtigen Leiterplatte hergestellt ist, wobei eine Bahn (4) aus einer geraden Anzahl von Schichten aus elektrisch leitendem Material (300.1, 300.2, 300.3, 300.4 bzw. 301.1, 301.2, 301.3, 301.4) besteht, die aufeinander gestapelt sind und dazu ausgelegt sind, um mit einem Strom versorgt zu werden, der in der gleichen Richtung fließt.

10. Aktuator mit Permanentmagneten nach Anspruch 9, wobei die Anzahl an aufeinander gestapelten Schichten aus elektrisch leitendem Material gleich vier ist.

11. Aktuator mit Permanentmagneten nach einem der vorangehenden Ansprüche, wobei das Substrat eines Rotorteils ($30_i$) eine Platte aus vorimprägniertem Werkstoff ist, wobei die Schicht bzw. Schichten aus elektrisch leitendem Material (300.1, 300.2, 300.3, 300.4 bzw. 301.1, 301.2, 301.3, 301.4) aus Kupfer besteht bzw. bestehen und mit einer Deckschicht (302) aus elektrisch isolierendem Material bedeckt ist bzw. sind.

12. Aktuator mit Permanentmagneten, enthaltend zumindest zwei verschiedene Paare ($3_i$, $3_2$; $3_3$, $3_4$) von zwei Rotorteilen ($30_1$, $31_1$; $30_2$, $31_2$; $30_3$, $31_3$; $30_4$, $31_4$), die in den Luftspalten zwischen dem ersten (10) und dem zweiten Statorteil (20) übereinander geordnet sind.

13. Aktuator mit Permanentmagneten nach Anspruch 12, wobei zwei übereinander geordnete Rotorteile, die zu zwei verschiedenen Paaren gehören, dazu ausgelegt sind, sich in einer gleichen Richtung zu bewegen, wenn sämtliche Bahnen mit Strom versorgt werden.

14. Aktuator mit Permanentmagneten nach Anspruch 12, wobei zwei übereinander geordnete Rotorteile, die zu zwei verschiedenen Paaren gehören, dazu ausgelegt sind, sich in einander entgegengesetzten Richtungen zu bewegen, wenn sämtliche Bahnen mit Strom versorgt werden.

15. Aktuator mit Permanentmagneten nach einem der vorangehenden Ansprüche, wobei sämtliche Bahnen der Rotorteile elektrisch in Reihe mit dem gleichen Strom versorgt werden.

16. Aktuator mit Permanentmagneten nach Anspruch 15, wobei die elektrische Verbindung zwischen Rotorteilen über biegsame Leiterdrähte erfolgt.

17. Aktuator mit Permanentmagneten nach einem der vorangehenden Ansprüche, wobei die die Permanentmagnete tragenden Substrate aus ferromagnetischem Material bestehen.

18. Aktuator mit Permanentmagneten nach einem der vorangehenden Ansprüche, wobei die Anzahl an Permanentmagneten in einer Reihe eines jeden Statorteils gerade ist.

19. Anordnung von Aktuatoren mit zumindest zwei Aktuatoren (A1, A2) mit Permanentmagneten nach einem der Ansprüche 1 bis 18, die übereinander geordnet sind, wobei der zweite Statorteil eines der beiden Aktuatoren auch den ersten Statorteil des anderen der beiden Aktuatoren bildet, Zwischenstatorteil genannt, wobei der Zwischenstatorteil (12) eine gleiche Reihe von Permanentmagneten aufweist, bei denen jeder Pol auf einer Seite eines gleichen Substrats vorliegt.

20. Anordnung von Aktuatoren (A1, A2) nach Anspruch 19, wobei sämtliche Bahnen der Rotorteile mit dem gleichen Strom I elektrisch in Reihe versorgt werden.

21. Anordnung von Aktuatoren (A1, A2) nach Anspruch 19 oder 20, wobei die elektrische Verbindung zwischen Rotorteilen über biegsame Leiterdrähte (5) erfolgt.

22. Anordnung von Aktuatoren (A1, A2) nach einem der Ansprüche 19 bis 21, wobei die Rotorteile ($30_1$, $30_2$, $30_3$, $30_4$; $31_1$, $31_2$, $31_3$, $31_4$) der beiden Aktuatoren dazu ausgelegt sind, sich in der gleichen Rotationsrichtung zu bewegen und mechanisch an ihrem Umfang über starre Flansche (7) verbunden sind, die jeweils einen Verbindungsflansch bilden.

23. Anordnung von Aktuatoren (A1, A2) nach Anspruch 22, wobei zwei aneinandergrenzende, starre Flansche (7d; 7g) mit Rotorscheiben verbunden sind, die dazu ausgelegt sind, sich in einander entgegengesetzten Rotationsrichtungen zu bewegen, wobei jeder der beiden Flansche mechanisch mit zumindest einem Schwenkarm (74.1; 74.2) verbunden ist, wobei jeder der beiden Schwenkarme mechanisch mit einem gleichen mechanischen Element (8.1; 8.2) verbunden ist, so dass die Rotationsbewegung der Rotorscheiben in entgegengesetzten Richtungen eine translatorische Verschiebung des mechanischen Elements (8.1; 8.2) bewirkt.

24. Anordnung von Aktuatoren (A1, A2) nach Anspruch 23, wobei jeder der beiden aneinandergrenzenden Flansche (7d; 7g) mechanisch mit zwei Schwenkarmen (74.1; 74.2) verbunden ist, die ihrerseits jeweils mechanisch mit einem anderen mechanischen Element (8.1; 8.2) verbunden sind, so dass die Rotationsbewegung der Rotorscheiben in radial entgegengesetzten Richtungen eine translatorische Verschiebung der beiden verschiedenen mechanischen Elemente in einander entgegengesetzten translatorischen Verschieberichtungen bewirkt.

25. Elektrische Einrichtung, die dazu bestimmt ist, die Unterbrechung-Trennung eines elektrischen Stroms zu bewirken, enthaltend zumindest eine Anordnung von Aktuatoren nach einem der Ansprüche 23 oder 24, wobei ein mechanisches Element (8.1; 8.2) fest mit einem beweglichen Kontaktstück (90) einer Vakuumröhre (9) verbunden ist.

26. Verwendung einer elektrischen Einrichtung nach Anspruch 25 als Teil einer mechatronischen Schaltvorrichtung, die dazu bestimmt ist, Hochspannungs-Gleichströme abzuschalten.

**Claims**

1. An electromagnetic actuator (A) of the permanent magnet type comprising:

   • a first stator part (1) formed in a first substrate (10), at least part of which has rotational symmetry with at least one plane face forming a disk defining an axis of symmetry orthogonal to the disk, and comprising a first series of permanent magnets (100, 110) apparent on at least the disk of the first substrate and uniformly distributed over its surface with a constant angular pitch; each of the permanent magnets having a shape with at least one plane of symmetry orthogonal to its plane and parallel north and south poles parallel to the disk; the contact surfaces of the permanent magnets with the disk being inscribed between two concentric circles concentric with the disk; the plane of symmetry of each magnet being oriented along a radius of these concentric circles; two adjacent permanent magnets of the first series having opposite magnetization directions (100, 110);
   • a second stator part (2) formed in a second substrate (20), at least part of which has rotational symmetry with at least one plane face forming a disk defining an axis of symmetry orthogonal to the disk, and comprising a second series of permanent magnets (200, 210) apparent on at least the disk of the second substrate and uniformly distributed over its surface with a constant angular pitch; each of the permanent magnets having a shape with at least one plane of symmetry orthogonal to its plane and parallel north and south poles parallel to the disk; the contact surfaces of the permanent magnets with the disk being inscribed between two concentric circles concentric with the disk; the plane of symmetry of each magnet being oriented along a radius of these concentric circles; two adjacent permanent magnets of the second series having opposite magnetization directions (210, 200); the second stator part being disposed parallel to the first stator part so that the axes of symmetry of their disks coincide and so that one pole (S or N) of a magnet of the second series (210, 200) faces an opposite pole of a magnet of the first series (100, 110);

   • at least one pair ($3_i$) of superposed rotor parts ($30_i$, $31_i$) in the airgaps between the first and second stator parts, each rotor part ($30_i$, $31_i$) being formed from an electrically-insulative material substrate comprising at least one track (4) of at least one electrically-conductive material layer (300.1, 300.2, 300.3, 300.4; 301.1, 301.2, 301.3, 301.4) disposed in a plane parallel to the plane of the substrate, the track comprising radial track portions (300, 301; 311, 310) called drive track portions, of unit width less than or equal to that of the permanent magnets in the radial direction to the airgaps and perpendicular to the direction of the thickness of the airgaps between the first and second stator parts, the drive track portions being regularly spaced with the same angular pitch as the first and second series of permanent magnets, the number of drive track portions being equal to the number of magnets of the first and second stator parts;

   in which actuator:

   • two adjacent drive track portions (300, 301; 311, 310) in the same plane in the same rotor part ($30_i$ or $31_i$) are adapted to be supplied with currents flowing in opposite directions;
   • two drive track portions (300, 311; 301, 310) respectively belonging to the first and second rotor parts of the same pair ($3_i$) of rotor parts and superposed so as to be subjected to the magnetic field created by the same pair of magnets are also adapted to be simultaneously supplied with currents flowing in opposite directions.

2. A permanent magnet actuator according to claim 1, wherein the permanent magnets are stuck directly onto the substrates supporting them.

3. A permanent magnet actuator according to claim 2, wherein the permanent magnets are furthermore inserted into grooves (1000, 2000) produced in the substrates of the stator parts.

4. A permanent magnet actuator according to any preceding claim, wherein between two adjacent magnets (100, 110 or 210, 200) of the same stator part is inserted a non-ferromagnetic material shield (120, 220) the thickness of which is sufficient to prevent mechanical contact between the exposed surfaces of the magnets and the rotor parts nearest them.

5. A permanent magnet actuator according to claim 4, wherein the shields (120, 220) are portions of a single mechanical part fastened to the stator part (10, 20) with which it is in contact.

6. A permanent magnet actuator according to claim 4 or claim 5, wherein the shields (120, 220) are in electrically-insulative material.

7. A permanent magnet actuator according to any one of claims 4 to 6, wherein the shields are produced from a fluoropolymer such as polytetrafluoroethylene (PTFE).

8. A permanent magnet actuator according to any preceding claim, wherein each rotor part ($30_i$, $31_i$; $30_1$, $31_1$; $30_2$, $31_2$; $30_3$, $31_3$; $30_4$, and $31_4$) comprises a single track (4), the drive track radial portions (300, 301) being connected to each other by tangential portions (3010) forming crenellations when the rotor part is seen from the front.

9. A permanent magnet actuator according to any preceding claim, wherein a rotor part is produced by a multi-layer printed circuit, a track (4) being constituted by an even number of superposed electrically-conductive material layers (300.1, 300.2, 300.3, 300.4 or 301.1, 301.2, 301.3, 301.4) adapted to be supplied with currents flowing in the same direction.

10. A permanent magnet actuator according to claim 9, wherein the number of superposed electrically-conductive material layers is equal to four.

11. A permanent magnet actuator according to any preceding claim, wherein the substrate of a rotor part ($30_i$) is pre-impregnated, the layer or layers of electrically-conductive material (300.1, 300.2, 300.3, 300.4 or 301.1, 301.2, 301.3, 301.4) being in copper and being covered with an electrically-insulative material finishing layer (302).

12. A permanent magnet actuator according to any preceding claim, comprising at least two distinct pairs ($3_1$, $3_2$; $3_3$, $3_4$) of two superposed rotor parts ($30_1$, $31_1$; $30_2$, $31_2$; $30_3$, $31_3$; $30_4$, and $31_4$) in the airgaps between the first stator part (10) and the second stator part (20).

13. A permanent magnet actuator according to claim 12, wherein two superposed rotor parts belonging to two distinct pairs are adapted to be moved in the same direction when all the tracks are supplied with current.

14. A permanent magnet actuator according to claim 12, wherein two superposed rotor parts belonging to two distinct pairs are adapted to be moved in opposite directions relative to each other when all the tracks are supplied with current.

15. A permanent magnet actuator according to any preceding claim, wherein all the tracks of the rotor parts are supplied electrically in series with the same current.

16. A permanent magnet actuator according to claim 15, wherein the electrical connection between rotor parts is effected by flexible conductive wires.

17. A permanent magnet actuator according to any preceding claim, wherein the substrates supporting the permanent magnets are in ferromagnetic material.

18. A permanent magnet actuator according to any preceding claim, wherein there is an even number of permanent magnets in a series of each stator part.

19. A set of actuators comprising at least two superposed permanent magnet actuators (A1, A2) according to any one of claims 1 to 18, wherein the second stator part of one of the two actuators also constitutes the first stator part of the other of the two actuators, called the intermediate stator part, said intermediate stator part (12) comprising the same series of permanent magnets with each pole apparent on one face of the same substrate.

20. A set of actuators (A1, A2) according to claim 19, wherein all the tracks of the rotor parts are supplied electrically in series with the same current I.

21. A set of actuators (A1, A2) according to claim 19 or claim 20, wherein the electrical connection between rotor parts is effected by flexible conductive wires (5).

22. A set of actuators (A1, A2) according to any one of claims 19 to 21, wherein the rotor parts ($30_1$, $30_2$; $30_3$, $30_4$; $31_1$, $31_2$; $31_3$, and $31_4$) of the two actuators are adapted to be moved in the same rotation direction and are mechanically connected at their periphery by rigid flanges (7) each constituting a connecting flange.

23. A set of actuators (A1, A2) according to claim 22, wherein two adjacent rigid flanges (7d; 7g) are connected to rotor disks adapted to be moved in opposite rotation directions relative to each other, each of the two flanges being mechanically connected to at least one movement rod (74.1; 74.2), each of the two movement rods being mechanically connected to the same mechanical element (8.1; 8.2), so that movement in rotation of the rotor disks in opposite directions generates movement in translation of the mechanical element (8.1; 8.2).

24. A set of actuators (A1, A2) according to claim 23, wherein each of the two adjacent flanges (7d; 7g) is mechanically connected to two movement rods (74.1; 74.2), themselves mechanically connected each to a distinct mechanical element (8.1; 8.2) so that movement in rotation of the rotor disks in opposite radial directions generates movement in translation of the two distinct mechanical elements in opposite translation directions relative to each other.

25. Electrical switchgear adapted to break/disconnect an electrical current, comprising at least one set of actuators according to claim 23 or claim 24, wherein a mechanical element (8.1; 8.2) is secured to a movable contact (90) of a vacuum interrupter (9).

26. The use of electrical switchgear according to claim 25 as part of a mechatronic circuit-breaker device for breaking high-voltage direct currents.

⊗  Sens du courant entrant ⊥ au plan XY
⊙  Sens du courant sortant ⊥ au plan XY
──►  Sens de déplacement des parties de rotor
- - - Lignes de flux magnétique

FIG. 1

FIG. 1A

FIG. 2A

FIG. 2B

FIG. 3

FIG. 4A

FIG. 4B

FIG. 5

FIG. 6A

FIG. 6B

FIG. 7

FIG. 7A

FIG. 8

Fermé

FIG. 10A

Intermédiaire

FIG. 10B

Ouvert

FIG. 10C

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19901120 A1
- US 2006208591 A